(19) **Europäisches Patentamt / European Patent Office / Office européen des brevets**

(11) **EP 1 911 614 B1**

(12) **EUROPÄISCHE PATENTSCHRIFT**

(45) Veröffentlichungstag und Bekanntmachung des Hinweises auf die Patenterteilung:
**07.04.2010 Patentblatt 2010/14**

(51) Int Cl.:
*B60G 17/005* (2006.01)   *B60G 17/056* (2006.01)
*B60G 21/073* (2006.01)

(21) Anmeldenummer: **07116673.0**

(22) Anmeldetag: **18.09.2007**

(54) **Federungssystem**

Suspension system

Système de ressort

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **14.10.2006 DE 102006048662**

(43) Veröffentlichungstag der Anmeldung:
**16.04.2008 Patentblatt 2008/16**

(73) Patentinhaber: **Deere & Company**
**Moline, IL 61265-8098 (US)**

(72) Erfinder: **Bitter, Marcus**
**68199 Mannheim (DE)**

(74) Vertreter: **Holst, Sönke**
**Deere & Company**
**European Office**
**Global Intellectual Property Services**
**John-Deere-Strasse 70**
**68163 Mannheim (DE)**

(56) Entgegenhaltungen:
WO-A-90/10551     DE-A1- 10 347 125
US-A1- 2004 113 377

## Beschreibung

Die Erfindung betrifft ein Federungssystem für ein land- oder bauwirtschaftliches Fahrzeug, insbesondere Laderfahrzeug, mit einem ersten und einem zweiten Hydraulikzylinder, die einen Rahmen des Fahrzeugs gegenüber einer Achse des Fahrzeugs abstützen, wobei die Hydraulikzylinder jeweils eine kolbenseitige Kammer und eine stangenseitige Kammer aufweisen und wobei die Hydraulikzylinder in einer Kreuzschaltung über eine erste und eine zweite Verbindungsleitung hydraulisch miteinander verbunden sind, so dass die kolbenseitige Kammer des ersten Hydraulikzylinders mit der stangenseitigen Kammer des zweiten Hydraulikzylinders verbunden ist, und umgekehrt, einem ersten in der ersten Verbindungsleitung und einem zweiten in der zweiten Verbindungsleitung angeordneten Hydraulikspeicher, einer Hydraulikquelle, einem Hydrauliktank, einer Steuerventileinrichtung, einer elektronischen Steuereinheit, elektrisch schaltbaren Schaltventilen, die in der ersten und zweiten Verbindungsleitung zwischen den Hydraulikspeichern und den Kammern der Hydraulikzylinder angeordnet sind, und eine erste und zweite Versorgungsleitung, die die Steuerventileinrichtung mit den Verbindungsleitungen verbinden, wobei die eine Versorgungsleitung zwischen den Schaltventilen der einen Verbindungsleitung in die eine und die andere Versorgungsleitung zwischen den Schaltventilen der anderen Verbindungsleitung in die andere Verbindungsleitung mündet.

Bei landwirtschaftlichen Fahrzeugen, wie z.B. Traktoren, sind Federungssysteme bekannt, mit denen die Vorderachse hydropneumatisch gefedert wird. Durch eine Federung der Vorderachse ergeben sich für den Fahrer eine Erhöhung des Fahrkomforts sowie eine Erhöhung der Arbeitsleistung, da sowohl die Fahrgeschwindigkeit als auch die Traktion der Fahrzeuge gegenüber ungefederten Fahrzeugen deutlich gesteigert werden kann. Die konstruktive hydraulische Gestaltung einer solchen Vorderachsfederung umfasst in der Regel Hydraulikspeicher, die mit an der Vorderachse angeordneten Hydraulikzylindern verbunden sind, welche wiederum einen Fahrzeugrahmen mit der Vorderachse verbinden. Bei derartigen Fahrzeugen ist die Vorderachse als Pendelachse ausgebildet, um eine Federung realisieren zu können. Ferner verfügen derartige Fahrzeuge über eine starre Hinterachse, um der Gefahr von Wankbewegungen oder gar eines Umkippens des Fahrzeugs entgegenzuwirken. Der Einsatz einer pendelnd gelagerten Hinterachse ist daher mit derartigen Federungssystemen für nur gefederte Vorderachsen nicht sinnvoll.

Es sind auch landwirtschaftliche Fahrzeuge bekannt, die sowohl über eine gefederte, pendelnd gelagerte Vorderachse als auch über gefederte Radaufhängungen verfügen. Derartige Fahrzeuge sind beispielsweise als Traktoren der Marke John Deere, 8000er Serie, bekannt. Hierbei wird das Problem von Wankbewegungen oder ein seitliches Abkippen des Rahmens des Fahrzeugs dadurch gelöst, dass eine hydraulische Verschaltung der Stangenseite der Federungszylinder der einen Hinterachsseite mit der Kolbenseite des gegenüberliegenden Federungszylinders vorgenommen wird. Der Vorteil dieser Verschaltung liegt darin, dass auf einen mechanischen Wankstabilisator verzichtet werden kann, da, wenn der eine Federungszylinder zusammengedrückt wird, der gegenüberliegende Federungszylinder ebenfalls durch den sich erhöhenden Druck auf dessen Stangenseite zwangsweise eingefahren wird. Auf diese Art können Wankbewegungen bis zu einem bestimmten Grad unterdrückt werden. Eine ungleichmäßige Belastung des Fahrzeugs, welche zu einem seitlichen Abkippen des Rahmens führen würde, kann durch unterschiedliche Drücke der im Federungssystem enthaltenen Hydrospeicher ausgeglichen werden. Ein derartiges Federungssystem ist jedoch an Fahrzeugen, die keine Hydraulikzylinder an einer pendelnd gelagerten Hinterachse aufweisen, nicht anwendbar.

Bei Laderfahrzeugen ist im Allgemeinen die Vorderachse als starre Achse ausgeführt und die Hinterachse ist pendelnd gelagert. Grund dafür ist die Tatsache, dass sich die Nutzlast eines Laderfahrzeuges hauptsächlich vor der Vorderachse befindet, weshalb in diesem Bereich eine erhöhte Steifigkeit gefordert ist, um ein Umkippen des Fahrzeuges zu vermeiden. Ein Federungssystem für ein derartiges Laderfahrzeug ist ebenfalls bekannt und wird beispielsweise an dem Turbofarmer "P41.7 Top" der Firma Merlo eingesetzt und unter dem Namen "EAS" - Electronic Active Suspension - vermarktet. Das Federungssystem der Firma Merlo umfasst eine an zwei Hydraulikzylindern aufgehängte Vorderachse, wobei die Hydraulikzylinder mit Hydraulikspeichern in Verbindung stehen und Hydraulikzylinder und Hydraulikspeicher je nach Lagezustand und Krafteinwirkung auf das Fahrzeug von einer elektronischen Steuereinheit entsprechend angesteuert werden. Die Hinterachse ist dabei pendelnd gelagert, so dass sowohl eine Federungsfunktion für die Vorderachse als auch eine Neigungskorrektur des Fahrzeugrahmens möglich ist. Eine in der elektronischen Steuereinheit implementierte Wankstabilisierung soll für eine stets waagerechte Stellung des Fahrzeugs sorgen. Die Wankstabilisierung ist jedoch aufwändig gestaltet und weist Verbesserungsmöglichkeiten auf, durch die der Fahrkomfort für eine Bedienperson optimierbar ist.

Die der Erfindung zugrunde liegende Aufgabe wird darin gesehen, ein Federungssystem der eingangs genannten Art anzugeben, durch welches ein oder mehrere der vorgenannten Probleme überwunden werden.

Zum technischen Umfeld wird auf die WO 90/10551 verwiesen.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird ein Federungssystem der eingangs genannten Art mit Mitteln zur Detektion und Kompensation von Lastzuständen am Federungssystem versehen. Die Mittel zur Detektion und Kompensation von Lastzuständen am Federungssystem ermöglichen, dass bevor die Federung aktiviert wird, festegestellt werden kann, ob sich das Fahrzeug in einem unsicheren Lastzustand befindet. Bei Aktivierung des Federungssystems bzw. der Federungssteuerung verändern sich die statischen Zustände am Fahrzeug grundlegend. Während das Fahrzeug bei deaktivierter Federung stabil steht, verringert sich bei Aktivierung der Federung die Abstützbreite des Fahrzeugs, wodurch Kräfte eingeleitet werden können, die das Fahrzeug zum Kippen bringen können. Derartige Kräfte können beispielsweise durch außermittige Beladung oder Schräglage des Fahrzeugs verursacht werden. Das Verringern der Abstützbreite erfolgt genau in dem Moment, indem man den Rahmen des Fahrzeugs auf den Hydraulikzylindern federnd abstützt. Anstatt der Spurbreite des Fahrzeugs, die bei deaktivierter Federung als Abstützbreite zur Verfügung steht, steht bei aktivierter Federung nur noch der Abstand der Befestigungspunkte der Hydraulikzylinder zur Verfügung, um ein mögliches Kippmoment zu halten. Wäre ein Kippmoment zu groß, würde an einem der Hydraulikzylinder eine Zugkraft entstehen, welche den Hydraulikzylinder vollständig auseinander ziehen würde, während der andere Hydraulikzylinder zusammengedrückt werden und als Kipppunkt dienen würde. Eine solche Kippbewegung würde bei plötzlicher Aktivierung der Federung sehr schnell ablaufen und im Extremfall zum Umkippen des ganzen Fahrzeugs führen. Durch die Mittel zur Detektion und Kompensation von Lastzuständen werden Situationen vermieden, in denen die Federung bei Vorliegen kritischer Lastzustände aktivierbar ist, da der Zustand des Fahrzeugs vor einer Aktivierung der Federung überprüft, d. h. detektiert wird und bei Vorliegen eines kritischen Lastzustands eine Aktivierung der Federung nicht zugelassen wird. Durch gezielte Ansteuerung der Hydraulikzylinder kann eine Kompensierung kritischer Lastzustände vorgenommen werden, so dass bei Aktivieren der Federung unkritische Lastzustände herstellbar sind.

Die Mittel zur Detektion und Kompensation von Lastzuständen können Druckübersetzer sowie Mittel zur Erfassung der Position eines Druckübersetzers umfassen, wobei die Druckübersetzer jeweils zwischen der ersten und zweiten Kammer eines jeden Hydraulikzylinders angeordnet sind. Die Druckübersetzer stellen hydraulisch kompensierte Lastfalldetektoren dar, die sich an beiden Hydraulikzylindern befinden. Durch die Druckübersetzer kann detektiert werden, ob eine Last an einer der beiden Stangen der Hydraulikzylinder zieht. Sollte dies der Fall sein, wird auf der Stangenseite des betroffenen Hydraulikzylinders eine Druckveränderung erfolgen. Diese Druckveränderung festzustellen, ist nicht unproblematisch, da sich im Hydraulikzylinder ein eingespannter Druck befinden kann, der sich beispielsweise durch äußere Erwärmung oder durch eine Verstellung des Hydraulikzylinders ergeben hat. Um diesen eingespannten Druck zu kompensieren, werden Druckübersetzer eingesetzt.

In einer bevorzugten Ausgestaltung der Erfindung werden Druckübersetzer eingesetzt, deren Flächenverhältnis der Druck erzeugenden Flächen in den Kammern dem Flächenverhältnis der Druck erzeugenden Flächen in den Kammern des jeweiligen Hydraulikzylinders im Wesentlichen entspricht. Ist diese Bedingung erfüllt und es greift keine äußere Kraft am Hydraulikzylinder an, so würde sich ein eingespannter Druck im Hydraulikzylinder kompensieren, da sich die Kolbenstange des Hydraulikzylinders und der Druckübersetzerkolben jeweils in eine Position des Kräftegleichgewichts bewegen würden. Dieses kann gegebenenfalls am Druckübersetzer mittels schwacher Zentrierungsfedern unterstützt werden, um Reibungseffekte zu unterdrücken. In dem Moment, in dem eine äußere Kraft an der Kolbenstange des Hydraulikzylinders angreift, wird das Druckgleichgewicht gestört und der Kolben des Druckübersetzers verändert seine Position. Greift eine positive Kraft an der Kolbenstange des Hydraulikzylinders an, erhöht sich der kolbenseitige Druck des Hydraulikzylinders und der Kolben des Druckübersetzers wird nach oben gedrückt. Gleichzeitig bedeutet eine positive Kraft, dass sich der Rahmen mit einem Teil seines Gewichts auf dieser Kolbenstange des Hydraulikzylinders abstützt. Greift eine negative Kraft an der Kolbenstange an, erhöht sich der stangenseitige Druck des Hydraulikzylinders und der Kolben des Druckübersetzers wird nach unten gedrückt. In diesem Fall bedeutet eine negative Kraft, dass sich der Rahmen nicht auf der Zylinderstange abstützt, sonder stattdessen an ihr zieht, was beim Öffnen des stangeseitigen Schaltventils zu einem Ausfahren der Kolbenstange des Hydraulikzylinders und damit zu einem Kippen des Rahmens führen könnte.

In einer bevorzugten Ausgestaltung der Erfindung umfassen die Mittel zur Erfassung der Position eines Druckübersetzers einen Schalter oder Sensor. Da aufgrund der Position des Kolbens eines oben beschriebenen Druckübersetzers die Kraftrichtung der an dem Hydraulikzylinder wirkenden Kraft bestimmt werden kann, wird ein derartiger Druckübersetzer verwendet und die Position des Kolbens mittels eines Schalters oder Sensors bestimmt. Die genaue Ausführung des Sensors oder Schalters ist mannigfaltig und soll hier im Detail nicht weiter beschrieben werden. Es ist jedoch aus Sicherheitsgründen sinnvoll, wenn ein Schalter als Schließer ausgeführt wird, so dass eine Fehlinterpretation bei Kabelbruch ausgeschlossen wird. Wichtig ist, dass der Kolben des Druckübersetzers leckagefrei abgedichtet ist, so dass kein Öl von der einen Hydraulikzylinderseite zur anderen fließen kann. Es ist wichtig, dass das veränderliche Volumen des Druckübersetzers nicht zu groß wird, damit es nicht zu unkontrollierbaren Bewegungen des Rahmens kommen kann.

In einem anderen Ausführungsbeispiel können die Mittel zur Detektion und Kompensation von Lastzuständen Drucksensoren umfassen, mit denen der Druck in den einzelnen Kammern des ersten und zweiten Hydraulikzylinders erfassbar ist. Die Aufgabe der Drucksensoren besteht darin, die Aufgaben der oben beschriebenen Druckübersetzer mit Schalter zu ersetzen, indem die in den Hydraulikzylinderkammern herrschenden Drücke gemessen und hinsichtlich der Richtung der an der Kolbenstange des Hydraulikzylinders angreifenden Kräfte bewertet werden. Die Kompensation eines eingespannten Druckes würde somit rechnerisch bzw. elektronisch gesteuert erfolgen.

Ferner können die Mittel zur Detektion und Kompensation von Lastzuständen auch Druckschalter umfassen, die mit jeweils einer Kammer eines Hydraulikzylinders in Verbindung stehen, wobei bei einer Hydraulikzylinderanordnung, bei der der Rahmen im Normalfall auf der Kolbenseite des Hydraulikzylinders lastet, die stangenseitige Kammer mit dem Druckschalter in Verbindung steht (selbstverständlich kann hierbei und auch bei den bereits erwähnten Beispielen eine umgekehrte Anordnung der Hydraulikzylinder zur Anwendung kommen, wobei dann der Druckschalter mit der stangenseitigen Kammer in Verbindung stehen würde). Sollte nun ein bestimmter Druck, der nur durch eine ziehende Kraft an der Kolbenstange erzeugt werden kann, auf der Stangeseite überschritten werden, schließen oder besser öffnen die Druckschalter und der Zustand wird als unsicher für das Fahrzeug detektiert. Es ist selbstverständlich denkbar, dass auch Drucksensoren die Aufgaben der Druckschalter übernehmen. Da eingespannte Drücke nicht direkt über die Druckschalter als solche erkannt werden ist die Lastfallerkennung nicht derart genau wie mit Drucksensoren oder Druckübersetzer, weshalb hier ein Sicherheitsaufschlag belegt werden sollte.

Als weiteres Beispiel können die Mittel zur Detektion und Kompensation von Lastzuständen Kraftsensoren umfassen, mit denen an den Hydraulikzylindern wirkende Kräfte indirekt oder direkt detektierbar sind. Eine direkte Messung wären hier beispielsweise die Lagerkräfte der Anlenkpunkte der Federungszylinder oder die Zugkräfte an der Zylinderstange. Eine indirekte Messung kann erfolgen, indem man die Durchbiegung oder Torsion verschiedener Bereiche der Achse oder des Rahmens misst, und daraus auf den Lastzustand des Fahrzeugs rückschließt.

Vorzugsweise sind die die Schaltventile derart ausgebildet, dass sie eine Durchflussstellung und eine Schließstellung aufweisen, wobei die Schließstellung ein in Richtung der Kammer öffnendes Rückschlagventil umfasst. Die Schaltventile sind zwischen jeder Kammer der Hydraulikzylinder und dem entsprechend zugeordneten Hydraulikspeicher angeordnet, so dass die Verbindung einer jeden Kammer zu einem der Hydraulikspeicher bzw. die Verbindung von zwei gegenüberliegenden Kammern (stangenseitige Kammer des einen Hydraulikzylinders mit der kolbenseitigen Kammer des anderen Hydraulikzylinders) individuell gesteuert werden kann. Befindet sich dabei das Schaltventil in seiner Öffnungsstellung kann ein Hydraulikfluss in beide Richtungen der Verbindungsleitung erfolgen. Befindet sich das Schaltventil in Schließstellung wird ein Abfluss aus der entsprechend zugeordneten Kammer des Hydraulikzylinders verhindert.

Alternativ können die Schaltventile auch eine Durchflussstellung und eine in beide Richtungen schließende Schließstellung aufweisen und mit einem in Richtung der Kammer öffnendes Rückschlagventil parallel geschaltet sein, so dass stets Hydraulikflüssigkeit in Richtung der Kammer fließen kann, jedoch umgekehrt keine Hydraulikflüssigkeit aus der Hydraulikkammer abfließen kann, wenn das Schaltventil in Schließstellung ist.

Vorzugsweise sind ferner die Verbindungsleitungen mit Druckschaltern versehen. Die Druckschalter ermöglichen bei einem Druckabfall, beispielsweise bei einem Schlauchbruch, diesen zu detektieren und ein Schalten der Schaltventile in ihre Schließstellung zu veranlassen, so dass keine Hydraulikflüssigkeit aus den Kammern des Hydraulikzylinders entweichen kann. Um ein Absacken des Rahmens infolge eines Schlauchs bzw. Rohrbruchs auszuschließen, müssen die einem Hydraulikzylinder zugeordneten Schaltventile derart angebracht sein, dass keine Schläuche als Verbindungselemente zwischen diesen Bauteilen vorhanden sind. Die Hydraulikspeicher können jeweils irgendwo zwischen den Schaltventilen der jeweiligen einen Kolbenstangenseite des einen Hydraulikzylinders und der Kolbenseite des anderen Hydraulikzylinders angeordnet sein, sowie zwischen den Schaltventilen der jeweiligen Kolbenstangenseite und der Kolbenseite angeordnet sein.

Die Steuerventileinrichtung umfasst vorzugsweise eine erste in die eine Versorgungsleitung mündende und eine zweite in die andere Versorgungsleitung mündende Zuflussleitung sowie eine erste in die eine Versorgungsleitung mündende und eine zweite in die andere Versorgungsleitung mündende Abflussleitung, wobei die Zuflussleitungen über Zuflusssteuerventile mit der Hydraulikpumpe oder dem Hydrauliktank und die Abflussleitungen über Abflusssteuerventile mit dem Hydrauliktank verbindbar sind. Der Zufluss in die Kolbenseite des einen Hydraulikzylinders und der Zufluss in die Kolbenstangenseite des anderen Hydraulikzylinders erfolgt somit über das eine Zuflusssteuerventil und der Zufluss in die Kammern des jeweils anderen Hydraulikzylinders erfolgt über das andere Zuflusssteuerventil. Entsprechendes gilt für den Abfluss über die Abflusssteuerventile.

Die Zuflusssteuerventile und/oder die Abflusssteuerventile umfassen vorzugsweise Schaltventile, wobei die Zuflusssteuerventile als 3/2 Wegeventile ausgebildet sein können und die Abflusssteuerventile als 2/2 Wegeventile. Eine Schaltstellung der Abflusssteuerventile weist jeweils ein in Richtung des Hydrauliktanks schließendes, leckagefreies Rückschlagventil auf, die andere Schaltstellung stellt vorzugsweise eine Durchflussstellung in beide Leitungsrichtungen dar. Die bisher dargestellte Steuerventileinrichtung erfüllt grundsätzlich alle erforderlichen Funktionen, wobei die Volumenströme gegebenenfalls noch mittels Stromregelventile für die Elektronik regelbarer gestaltet werden können.

In einer anderen Ausführungsform können die Zuflusssteuerventile und/oder die Abflusssteuerventile Proportionalventile umfassen. Mithilfe von Proportionalventilen können die Hydraulikzylinder unabhängig voneinander mit einstellbaren Volumenströmen angesteuert werden. Dieses kann besonders während des Ladevorgangs von Vorteil sein, damit die Hydraulikzylinder mehr oder weniger gleichmäßig und gleichzeitig ausfahren können. Auch ist es von Vorteil, dass die bereits erwähnten Lastzustandskompensation ruckfrei vorgenommen werden können. Dieses führt zu einer Verbesserung des Fahrkomforts und der Fahrsicherheit. Im Wesentlichen unterscheidet sich der Einsatz von Proportionalventilen gegenüber den ON/OFF-Schaltventilen dadurch, das die beiden Schaltventile in der Zuflussleitung durch Proportionalventile ersetzt und in beiden Abflussleitungen je ein Proportionalventil hinzugefügt worden ist. Bei der Abflussleitung ist zur Wahrung der Schlauchbruchsicherheit meist ein leckagefreies Schaltventil erforderlich, da Proportionalventile in der Regel nicht leckagefrei sind. Selbstverständlich ist es denkbar, dass hier wie auch in den vorherigen Ausführungen die leckagefreien Schaltventile durch entsperrbare Rückschlagventile ersetzt werden können, die mittels geeigneter Maßnahmen angesteuert werden. Wichtig ist nur, dass die Verbindung leckagefrei verschlossen und bei Bedarf geöffnet werden kann.

Um die Versorgung des Federungssystems druckabhängig gestalten zu können, ist eine Lasterkennungseinrichtung (Load-Sensing Einrichtung) vorgesehen ist, die einen Druck in der ersten oder zweiten Zuflussleitung detektiert. Die Load-Sensing Einrichtung erstreckt sich zwischen den Zuflussleitungen und einer Druckölversorgung, beispielsweise einer verstellbaren Hydraulikölpumpe, wobei die Load-Sensing Einrichtung mit einem Wechselventil versehen ist, so dass stets der in der jeweiligen Zuflussleitung höchste Druck an die Druckölversorgung gemeldet wird. Diese Load-Sensing Einrichtung kann sowohl bei den Ausführungen der Steuerventileinrichtung mit Schaltventilen als auch bei der mit Proportionalventilen eingesetzt werden.

Zur Druckentlastung der Load-Sensing Einrichtung in Neutralstellung sowie zur Gewährleistung einer Rohrbruchsicherung bzw. Schlauchbruchsicherung können die Zuflussleitungen mit einem in Richtung der Versorgungsleitungen öffnenden Rückschlagventil versehen sein.

Vorzugsweise sind die Abflussleitungen mit einer Drossel oder Blende versehen. Die Drosseln oder Blenden bewirken, dass das Öl nicht zu schnell aus den Kammern der Hydraulikzylinder abfließen kann, so dass der Prozess beherrschbar bleibt. Es wäre auch denkbar, geeignete Schaltventile zu verwenden, oder vor oder hinter dem Abflusssteuerventilen Stromregelventile zu verwenden.

In einer bevorzugten Ausgestaltung der Erfindung können die kolbenseitigen und die kolbenstangenseitigen Kammern der Hydraulikzylinder mit je einem entsperrbaren Rückschlagventil versehen sein, wobei das Rückschlagventil in Richtung der jeweiligen Kammer öffnet. Dieses dient dazu, die Hydraulikzylinder nicht nur als Federungszylinder zu verwenden, sondern auch bei deaktivierter Federung die Hydraulikzylinder zu einer Art Hangausgleich zu verwenden, indem man bei Hanglage den Rahmen gezielt hydraulisch zur Seite neigen kann, um die Stabilität zu erhöhen bzw. um einen Hangausgleich bzw. eine Schräglagekompensation zu bewirken.

Das erfindungsgemäße Federungssystem kann insbesondere an land- oder bauwirtschaftliches Fahrzeugen, insbesondere Laderfahrzeugen, mit einer pendelnd gelagerten ersten Achse und einer gefederten zweiten Achse eingesetzt werden, da durch die vorgesehenen Einrichtungen zur Lastzustandserkennung die häufig beim Betreiben derartiger Fahrzeuge auftretenden kritischen Lastzuständen erkannt und entsprechende Maßnahmen getroffen werden können, um derartige Lastzustände abzustellen bzw. eine unkritische Lastverteilung am Fahrzeug herzustellen, bevor die Federung des Fahrzeugs aktiviert wird. Je nach Art des Fahrzeug kann die Vorderachse oder die Hinterachse des Fahrzeugs gefedert ausgebildet sein bzw. die Hinterachse oder die Vorderachse pendelnd gelagert sein.

Das erfindungsgemäße Federungssystem stellt eine Federung mit hydraulischer Wankstabilisierung für die gefederte Achse des Fahrzeugs dar. Dabei ist es von Vorteil, dass die gefederte Achse gefedert werden kann, ohne dass zusätzliche mechanische Maßnahmen für eine Wankstabilisierung erforderlich sind. Das eingangs genannte Federungssystem weist zwei unabhängig voneinander betreibbare Hydraulikzylinder auf, die den Rahmen des Fahrzeugs gegenüber den Achsen des Fahrzeugs federn bzw. abstützen. Um zu verhindern, dass während der Fahrt Wankbewegungen auftreten, sind die Hydraulikzylinder in einer hydraulischen Kreuzschaltung miteinander verschaltet. Die damit verbundenen Ausgleichsbewegungen des einen Hydraulikzylinders bei Bewegungen des anderen Hydraulikzylinders arbeiten einem Wanken des Rahmens gegenüber den Fahrzeugachsen entgegen, so dass Wankbewegungen am Fahrzeug hydraulisch unterdrückt werden. Eine gefederte Achse reduziert die Stöße auf die Gesamtstruktur des Fahrzeugs erheblich und erhöht so die Lebensdauer tragender Teile. Auch kleinere Bauteile werden durch die Verringerung von Schwingungen geringer belastet, so dass deren Zuverlässigkeit gesteigert wird. Ferner wird der Fahrkomfort durch das Federungssystem erheblich gesteigert und die Fahrstabilität bei hohen Geschwindigkeiten verbessert. Daraus können sich zudem Zeitvorteile beim Betreiben des Fahrzeugs ergeben. Ferner ist es von Vorteil, dass das erfindungsgemäße Federungssystem mit zwei Hydraulikspeicher auskommt, sofern sichergestellt wird, dass durch Federungsbewegungen kein Vakuum in den Hydraulikspeichern entstehen kann, was außer bei Kolbenspeichern zu einer Beschädigung der Hydraulikspeicher führen würde.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:

Fig. 1    eine Seitenansicht eines Teleskopladers mit einem erfindungsgemäßen Federungssystem,

Fig. 2    einen schematischen Hydraulikschaltplan (ohne Steuerventileinrichtung) eines Ausführungsbeispiels für ein Federungssystem mit hydraulischer Lastzustandsdetektion mittels Druckübersetzer,

Fig. 2a   eine schematische Zeichnung eines Hydraulikzylinders mit Druckübersetzer mit schematischer und beispielhafter Darstellung der jeweiligen Flächen, Drücke und Kräfte,

Fig. 3   einen schematischen Hydraulikschaltplan (ohne Steuerventileinrichtung) eines weiteren Ausführungsbeispiels für ein Federungssystem mit hydraulischer Lastzustandsdetektion mittels Drucksensoren,

Fig. 4   einen schematischen Hydraulikschaltplan (ohne Steuerventileinrichtung) eines weiteren Ausführungsbeispiels für ein Federungssystem mit hydraulischer Lastzustandsdetektion mittels Druckschalter,

Fig. 5   einen vereinfachten schematischen Hydraulikschaltplan (ohne Lastfalldetektion) gemäß den in den Figuren 2 bis 4 dargestellten Ausführungsbeispielen, jedoch mit dargestellter Steuerventileinrichtung,

Fig. 6   einen vereinfachten schematischen Hydraulikschaltplan (ohne Lastfalldetektion) gemäß Figur 5, mit einer alternativen Ausführungsform der Steuerventileinrichtung und

Fig. 7   einen vereinfachten schematischen Hydraulikschaltplan (ohne Lastfalldetektion) gemäß Figur 5, mit einer weiteren alternativen Ausführungsform der Steuerventileinrichtung.

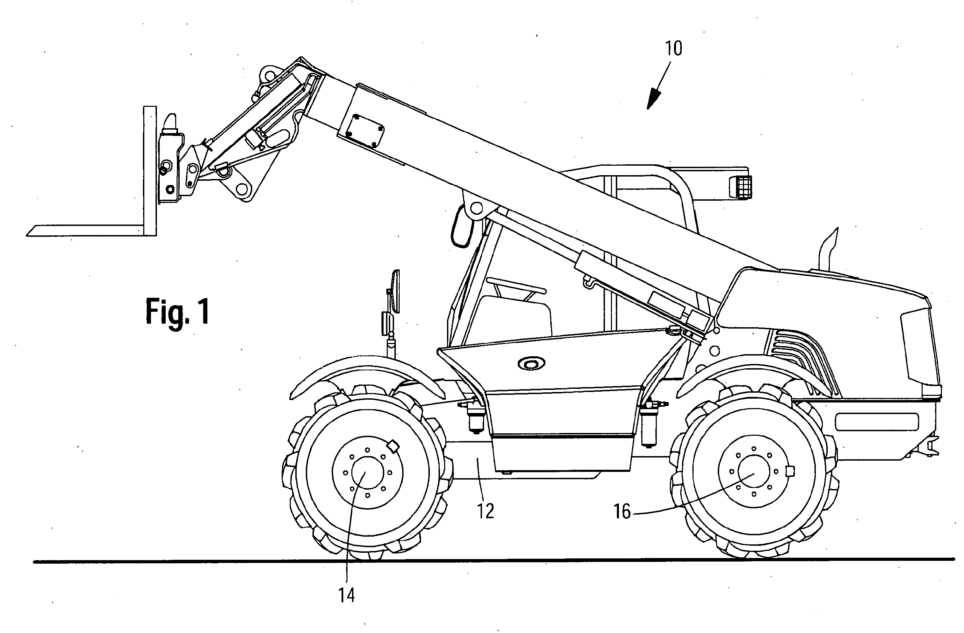

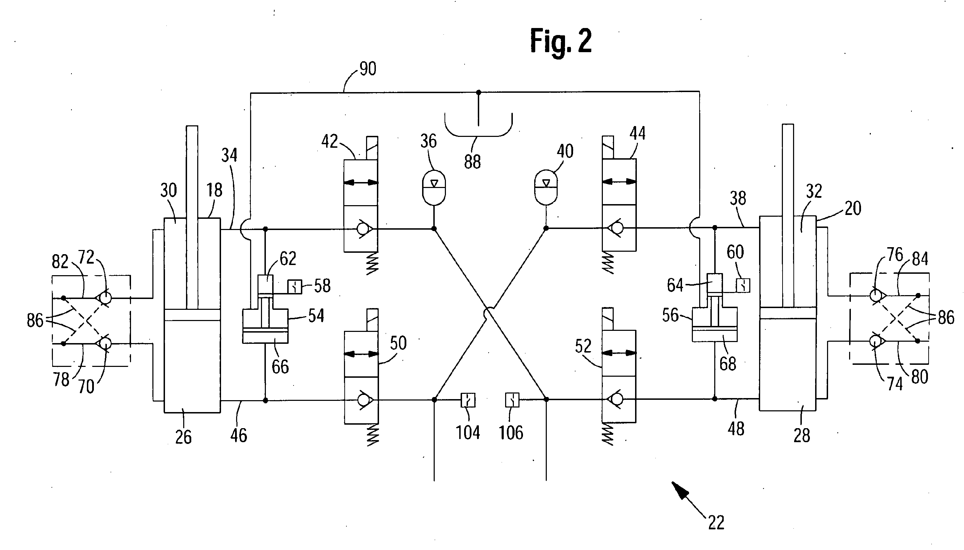

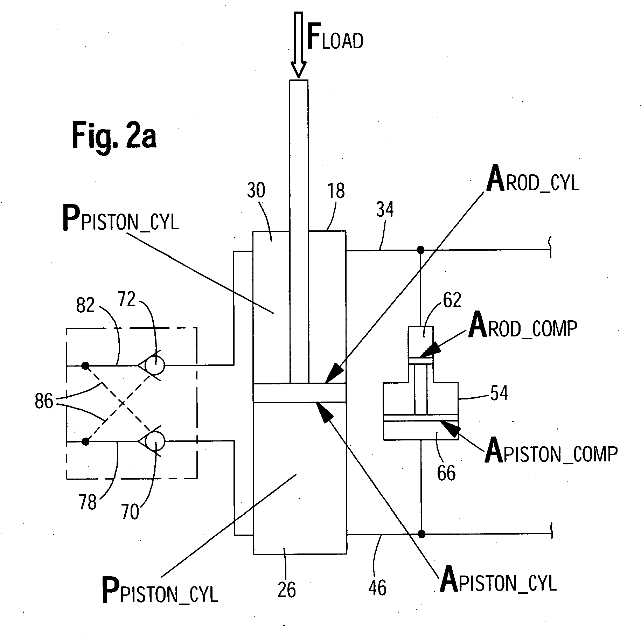

Figur 1 zeigt ein als Teleskoplader ausgebildetes landwirtschaftliches Fahrzeug 10, welches einen Rahmen 12, eine Vorderachse 14 und eine Hinterachse 16 aufweist. Die Hinterachse 16 ist pendelnd gelagert, wie es für Teleskoplader üblich ist. Die Vorderachse 14 ist derart federnd aufgehängt, dass sich zwischen dem Rahmen 12 und der Vorderachse 14, beidseitig der Fahrzeugmittenlängsachse, jeweils ein Hydraulikzylinder 18, 20 erstreckt, die Teil eines in den Figuren 2 bis 6 näher erläuterten Federungssystems 22 mit hydraulischer Wankstabilisierung sind. In analoger Weise könnte auch die Vorderachse 12 pendelnd gelagert ausgeführt sein und die Hydraulikzylinder zur Federung der Hinterachse 16 entsprechend zwischen der Hinterachse 16 und dem Rahmen 12 angeordnet werden. Des Weiteren ist es denkbar ein derartiges Federungssystem 22 auch an einem Traktor (mit oder ohne Frontlader), einem Radlader oder einem anderen Laderfahrzeug einzusetzen.

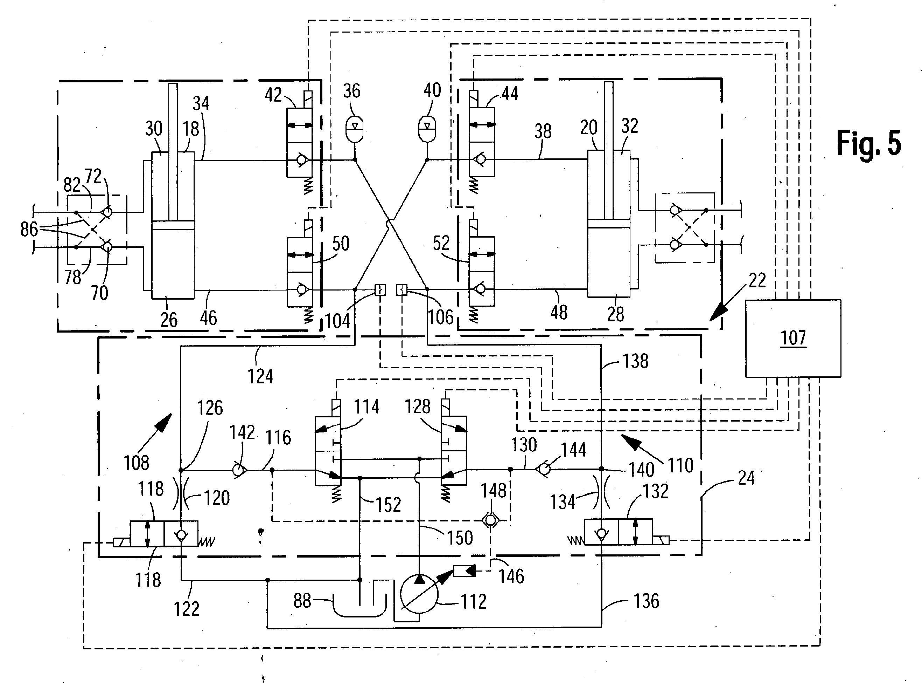

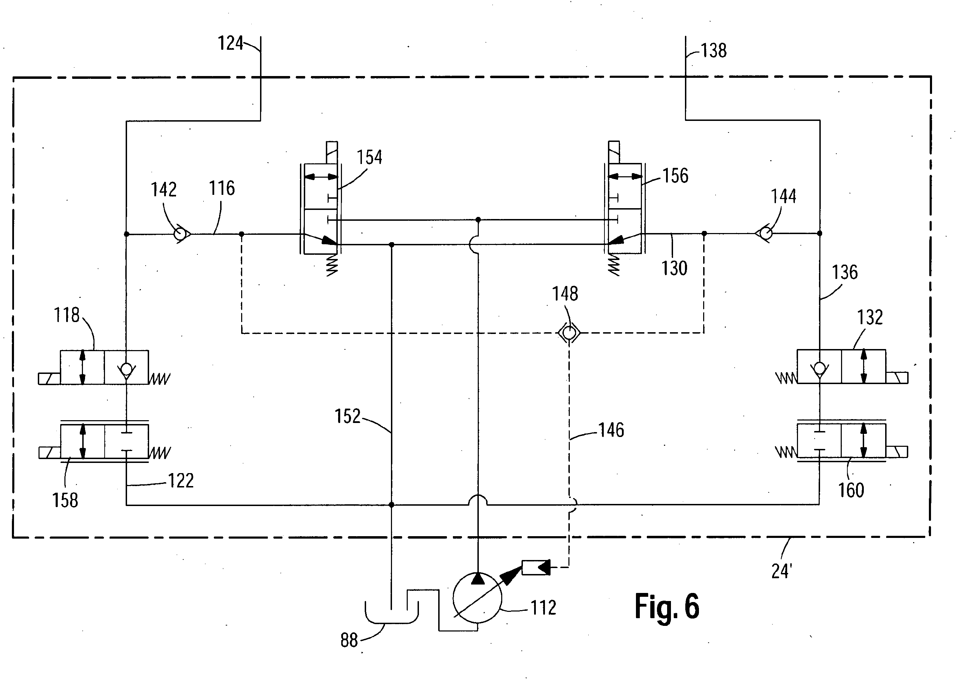

Anhand der Figuren 2 bis 6 wird in detaillierter Weise das Federungssystem 22 beschrieben, wobei nur in den Figuren 2 bis 4 die Systemkomponenten zur Lastzustandserkennung dargestellt sind, auf deren Darstellung in Figur 5 zur Vereinfachung verzichtet wurde. Ferner wurde zur Vereinfachung in den Figuren 2 bis 4 auf die Darstellung einer Steuerventileinrichtung 24 bzw. 24' verzichtet, welche anhand der Figuren 5 und 6 näher erläutert wird.

In einem ersten Ausführungsbeispiel gemäß Figur 2, weist das Federungssystem einen ersten Hydraulikzylinder 18 und einen zweiten Hydraulikzylinder 20 auf. Die Hydraulikzylinder weisen jeweils eine kolbenseitige Kammer 26, 28 und eine kolbenstangenseitige Kammer 30, 32 auf. Die kolbenstangenseitige Kammer 30 des ersten Hydraulikzylinders 18 ist über eine Hydraulikleitung 34 mit einem ersten Hydraulikspeicher 36 verbunden. Die kolbenstangenseitige Kammer 32 des zweiten Hydraulikzylinders 20 ist über eine Hydraulikleitung 38 mit einem zweiten Hydraulikspeicher 40 verbunden. In der kolbenstangenseitigen Hydraulikleitung 34 des ersten Hydraulikzylinders 18 ist zwischen der Kammer 30 und dem ersten Hydraulikspeicher 36 ein Schaltventil 42 angeordnet. In der kolbenstangenseitigen Hydraulikleitung 38 des zweiten Hydraulikzylinders 20 ist zwischen der Kammer 32 und dem zweiten Hydraulikspeicher 40 ein Schaltventil 44 angeordnet. Die kolbenseitige Kammer 26 des ersten Hydraulikzylinders 18 ist über eine Hydraulikleitung 46 zwischen dem Schaltventil 44 und dem zweiten Hydraulikspeicher 40 mit der kolbenstangenseitigen Hydraulikleitung 38 des zweiten Hydraulikzylinders 20 verbunden. Die kolbenseitige Kammer 28 des zweiten Hydraulikzylinders 20 ist über eine Hydraulikleitung 48 zwischen dem Schaltventil 42 und dem ersten Hydraulikspeicher 36 mit der kolbenstangenseitigen Hydraulikleitung 34 des ersten Hydraulikzylinders 18 verbunden. In der kolbenseitigen Hydraulikleitung 46 des ersten Hydraulikzylinders 18 ist zwischen der Kammer 26 und dem zweiten Hydraulikspeicher 40 ein Schaltventil 50 angeordnet. In der kolbenseitigen Hydraulikleitung 48 des zweiten Hydraulikzylinders 20 ist zwischen der Kammer 28 und dem ersten Hydraulikspeicher 36 ein Schaltventil 52 angeordnet. Zwischen den beiden Hydraulikzylindern 18, 20 ist über die kolbenstangenseitige Hydraulikleitung 34 des ersten Hydraulikzylinders 18 in Verbindung mit der kolbenseitigen Hydraulikleitung 48 des zweiten Hydraulikzylinders 20 eine erste Verbindungsleitung und über die kolbenstangenseitige Hydraulikleitung 38 des zweiten Hydraulikzylinders 20 in Verbindung mit der kolbenseitigen Hydraulikleitung 46 des ersten Hydraulikzylinders 18 eine zweite Verbindungsleitung hergestellt, wobei erste und zweite Verbindungsleitungen somit eine Art hydraulische Kreuzschaltung darstellt, wodurch die kolbenstangenseitige Kammer 30 des ersten Hydraulikzylinders 18 mit der kolbenseitigen Kammer 28 des zweiten Hydraulikzylinders 20 verbindbar bzw. beide Kammern 30, 28 mit dem ersten Hydraulikspeicher 36 verbindbar und analog dazu die kolbenstangenseitige Kammer 32 des zweiten Hydraulikzylinders 20 mit der kolbenseitigen Kammer 26 des ersten Hydraulikzylinders 18 bzw. beide Kammern 32, 26 mit dem zweiten Hydraulikspeicher 40 verbindbar sind. Die Schaltventile 42, 44, 50, 52 weisen jeweils eine Durchflussstellung, in der ein hydraulischer Fluss in beide Leitungsrichtungen zugelassen ist, und ein Schließstellung auf, in der mittels eines in jedem Schaltventil 42, 44, 50, 52 integrierten Rückschlagventils ein hydraulischer Fluss nur in Richtung der jeweiligen Kammer 30, 32, 26, 28 zugelassen ist.

Bei dem in Figur 2 dargestellten Ausführungsbeispiel ist an dem ersten Hydraulikzylinder 18 zwischen den Kammern 26, 30 ein erster Druckübersetzer 54 angeordnet. An dem zweiten Hydraulikzylinder 20 ist zwischen den Kammern 28, 32 ein zweiter Druckübersetzer 56 angeordnet. Die Druckübersetzer 54, 56 sind jeweils mit einem Positionsschalter 58, 60 versehen.

Ähnlich wie die Hydraulikzylinder 18, 20 weisen die Druckübersetzer 54, 56 eine erste Kammer 62, 64 und eine zweite Kammer 66, 68 auf wobei die erste Kammer 62, 64 jeweils mit der kolbenstangenseitigen Kammer 30, 32 der Hydraulikzylinder 18, 20 und die zweite Kammer 66, 68 jeweils mit der kolbenseitigen Kammer 26, 28 der Hydraulikzylinder 18, 20 hydraulisch verbunden sind. Die Druckübersetzer 54, 56 sind dabei so ausgelegt, dass das Flächenverhältnis der einen Druck übertragenden Flächen in den Kammern 62 und 66 bzw. 64 und 68 den Flächenverhältnissen der einen Druck übertragenden Flächen in den Kammern 30 und 26 bzw. 32 und 28 der Hydraulikzylinder 18, 20 entspricht.

Ferner sind die Hydraulikzylinder 18 und 20 mit entsperrbaren Rückschlagventilen 70, 72 bzw. 74, 76 versehen, welche in Richtung der Kammern 26, 30 und 28, 32 der Hydraulikzylinder 18 bzw. 20 öffenbar sind. Die kolbenseitigen Rückschlagventile 70, 74 sind in Hydraulikleitungen 78, 80 angeordnet, die mit der kolbenseitigen Kammer 26, 28 des jeweiligen Hydraulikzylinders 18, 20 verbundenen sind. Die kolbenstangenseitigen Rückschlagventile 72, 76 sind in Hydraulikleitungen 82, 84 angeordnet, die mit der kolbenstangenseitigen Kammer 30, 32 des jeweiligen Hydraulikzylinders 18, 20 verbunden sind. Zur Entsperrung bzw. Öffnung der Rückschlagventile 70, 72, 74, 76 ist jeweils eine Steuerdruckleitung 86 vorgesehen, die für jeden Hydraulikzylinder 18, 20 jeweils das kolbenseitige Rückschlagventil 70 bzw. 74 mit der kolbenstangenseitigen Hydraulikleitung 82 bzw. 84 sowie das kolbenstangenseitige Rückschlagventil 72 bzw. 76 mit der kolbenseitigen Hydraulikleitung 78 bzw. 80 verbindet. Auf diese Weise kann unabhängig von den in den Hydraulikleitungen 34, 46 des ersten Hydraulikzylinders 18 vorgesehenen Schaltventilen 42, 50 sowie unabhängig von den in den Hydraulikleitungen 38, 48 des zweiten Hydraulikzylinders 20 vorgesehenen Schaltventilen 44, 52 eine Verstellung des ersten bzw. zweiten Hydraulikzylinders 18, 20 erfolgen. So kann z.B. ein Hangausgleich bzw. eine Schräglagekompensation bzw. eine Lastzustandsveränderung des Fahrzeugs 10 erfolgen.

Die Druckübersetzer 54, 56 mit vorzugsweise integrierten Positionsschaltern 58, 60 dienen als Lastfalldetektoren, die entsprechend einen Lastzustand bzw. Lastfall an den Hydraulikzylindern 18, 20 detektieren können. Die Grundidee ist, dass auf diese Weise detektiert werden kann, ob eine Last an einem der beiden Kolbenstangen der Hydraulikzylinder 18, 20 zieht. Sollte dies der Fall sein, müsste sich auf der Kolbenstangenseite des betroffenen Hydraulikzylinders 18, 20 ein höherer Druck als bei unbelasteter Kolbenstange einstellen. Ein derartiger Druckunterschied kann sich dadurch einstellen, dass sich im Hydraulikzylinder 18, 20 ein eingespannter Druck befindet, der beispielsweise durch äußere Erwärmung oder durch eine Verstellung des Hydraulikzylinders 18, 20 zur Schräglagekompensation über die beiden entsperrbaren Rückschlagventile 70, 72 bzw. 74, 76 ergeben hat. Um diesen eingespannten Druck zu kompensieren, werden die Druckübersetzer 54, 56 eingesetzt, dessen Flächenverhältnisse denen der Hydraulikzylinder 18, 20 entsprechen. Sollte ein kritischer Lastzustand bzw. Lastfall detektiert werden, muss dieser vor Aktivieren der hydraulischen Federung, was durch entsprechendes Hinzuschalten der Hydraulikspeicher 36, 40 über die jeweiligen Schaltventile 42, 44, 50, 52 erfolgen kann, entsprechend kompensiert werden. Zur Kompensation der kritischen Lastzustände müssen die Hydraulikzylinder 18, 20 entsprechend über die mit den entsperrbaren Rückschlagventilen 70, 72 und 74, 76 versehenen Hydraulikleitungen 78, 82 bzw. 80, 84 angesteuert werden.

Am Beispiel des ersten Hydraulikzylinders 18 und des ersten Druckübersetzers 54 wird in Figur 2a das sich am Hydraulikzylinder 18 bzw. am Druckübersetzer 54 einstellende Kräfte- und Druckgleichgewicht näher erläutert. Die diesbezüglichen Ausführungen gelten in analoger Weise für den zweiten Hydraulikzylinder 20 bzw. zweiten Druckübersetzer 56.

An der Kolbenstange des Hydraulikzylinders 18 ergibt sich das folgende Kräftegleichgewicht, wobei $p_{ROD\_CYL}$ der Druck in der kolbenstangenseitigen Kammer 30, $A_{ROD\_CYL}$ die kolbenstangenseitige Kolbenfläche, $F_{LOAD}$ eine äußere an der Kolbenstange wirkenden Kraft, $p_{PISTON\_CYL}$ der Druck in der kolbenseitigen Kammer 26 und $A_{PISTON\_CYL}$ die kolbenseitige Kolbenfläche ist:

$$p_{ROD\_CYL} * A_{ROD\_CYL} + F_{LOAD} = p_{PISTON\_CYL} * A_{PISTON\_CYL}.$$

An den beiden Flächen $A_{ROD\_COMP}$ und $A_{PISTON\_COMP}$ des Druckübersetzers 54 stellt sich das folgende Kräftegleichgewicht ein:

$$p_{ROD\_CYL} * A_{ROD\_COMP} = p_{PISTON\_CYL} * A_{PISTON\_COMP}.$$

Für die Flächen $A_{ROD\_CYL}$ und $A_{PISTON\_CYL}$ des Hydraulikzylinders 18 sowie $A_{ROD\_COMP}$ und $A_{PISTON\_COMP}$ des Druckübersetzers 54 muss die folgende Bedingung gelten:

$$A_{ROD\_CYL} / A_{PISTON\_CYL} = A_{ROD\_COMP} / A_{PISTON\_COMP}$$

Ist diese Bedingung erfüllt und es greift keine äußere Kraft am Hydraulikzylinder an, so würde sich ein eingespannter Druck im Zylinder kompensieren, da sich die Kolbenstange des Hydraulikzylinders 18 und der Kolbenstange des Druckübersetzers 54 jeweils in eine Position des Kräftegleichgewichts bewegen würden. Dieses kann evtl. am Druckübersetzer 54 mittels Zentrierungsfedern unterstützt werden, um Reibungseffekte zu unterdrücken. In dem Moment, in dem eine äußere Kraft an der Kolbenstange des Hydraulikzylinders 18 angreift, wird das Druckgleichgewicht gestört und der Kolben des Druckübersetzers 54 verändert seine Position. Greift eine auf den Kolben des Hydraulikzylinders 18 drückende (positive) Kraft an der Zylinderstange an, erhöht sich der Druck $p_{PISTON\_CYL}$ und der Kolben des Druckübersetzers 54 wird nach oben gedrückt. Gleichzeitig bedeutet eine positive Kraft, dass sich der Rahmen 12 des Fahrzeugs 10 mit einem Teil seines Gewichts auf der Kolbenstange abstützt. Greift eine an der Kolbenstange ziehende Kraft an der Kolbenstange des Hydraulikzylinders 18 an, erhöht sich der Druck $p_{ROD\_CYL}$ und der Kolben des Druckübersetzers 54 wird nach unten gedrückt. In diesem Fall bedeutet eine negative Kraft, dass sich der Rahmen 12 des Fahrzeugs 10 nicht auf der Kolbenstange abstützt, sonder stattdessen an ihr zieht, was beim Öffnen des stangeseitigen Schaltventils 42 (bzw. 44) zu einem Ausfahren der Kolbenstange und damit zu einem Kippen des Rahmens 12 bzw. Fahrzeugs 10 führen könnte.

Da aufgrund der Position des Kolbens des Druckübersetzers 54, 56 die Kraftrichtung bestimmt werden kann, besteht dieser Teil des Ausführungsbeispiels darin, für den Druckübersetzer 54, 56 die Position seines Kolbens mittels eines Schalters 58, 60 oder Sensors zu bestimmen. Die genaue Ausführung des Sensors oder Schalters 58, 60 ist mannigfaltig und soll hier im Detail nicht weiter beschrieben werden. Es ist jedoch aus Sicherheitsgründen sinnvoll, dass ein Schalter 58, 60 als Schließer ausgeführt wird. Damit wird gewährleistet, dass ein Kabelbruch nicht zu einer Fehlinterpretation führen kann. Wichtig ist ferner, dass der Kolben des Druckübersetzers 54, 56 leckagefrei abgedichtet ist, so dass kein Öl von der einen Kammer 26, 28 des Hydraulikzylinders 18, 20 zur anderen Kammer 30, 32 des Hydraulikzylinders 18, 20 fließen kann. Eine in einen Hydrauliktank 88 mündende Leckageleitung 90 dient dazu, das beim Verfahren des Kolbens des Druckübersetzers 54, 56 entstehende oder verschwindende Volumen auszugleichen. Es ist wichtig, dass das veränderliche Volumen des Druckübersetzers 54, 56 nicht zu groß wird, damit es nicht zu unkontrollierbaren Bewegungen des Rahmens 12 kommen kann.

Grundsätzlich kann man die Funktion des Druckübersetzers 54, 56 samt Schalter auch als Druckdifferenzschalter bezeichnen, die im Niederdruckbereich durchaus üblich sind und die gleichen Aufgaben übernehmen können.

Für den unkritischen Lastzustand, dass wenn der Rahmen 12 auf beiden Kolbenstangen der Hydraulikzylinder 18, 20 ruht, befinden sich die Kolben der Druckübersetzer 54, 56 in einer oberen Stellung, welche durch die angeordneten Schalter 58, 60 detektiert werden kann. In einem solchen Fall können die beiden kolbenstangenseitigen Schaltventile 42, 44 der Hydraulikzylinder 18, 20 ohne Gefahr geöffnet werden.

Ein kritischer Lastzustand bzw. Lastfall stellt sich ein, wenn, bezugnehmend auf die Zeichnung, Figur 2, der Rahmen 12, beispielsweise auf der Kolbenstange des zweiten Hydraulikzylinders 20 ruht und an der Kolbenstange des ersten Hydraulikzylinders 18 zieht. In einem solchen Fall würde der Rahmen 12 sofort nach rechts kippen, sollte das kolbenstangenseitige Schaltventil 42 des ersten Hydraulikzylinders geöffnet werden. Dieser kritische Lastzustand wird jedoch detektiert, insofern, dass die Kolben der Druckübersetzer 54, 56 in unterschiedliche Stellungen verfahren, nämlich der Kolben des Druckübersetzers 56 des zweiten Hydraulikzylinders 20 in eine obere Stellung und der der Kolben des Druckübersetzers 54 des ersten Hydraulikzylinders 18 in eine untere Stellung. Somit wäre der Schalter 60 des zweiten Druckübersetzers 56 geschlossen und der Schalter 58 des ersten Druckübersetzers 54 geöffnet. Der kritische Lastzustand ist damit klar erkennbar und eine Aktivierung der Federung durch Öffnen der Schaltventile 42, 44, 50, 52 verhinderbar.

Gleiches gilt für den umgekehrten Fall, nämlich wenn, bezugnehmend auf die Zeichnung, Figur 2, der Rahmen auf der Kolbenstange des ersten Hydraulikzylinders 18 ruht und an der Kolbenstange des zweiten Hydraulikzylinders 20 zieht. In einem solchen Fall würde der Rahmen 12 sofort nach links kippen, sollte das kolbenstangenseitige Schaltventil 44 des zweiten Hydraulikzylinders geöffnet werden. Analog zu dem oberen Fall würde auch hier dieser kritische Lastzustand detektierbar sein, da nicht beide Schalter 58, 60 sondern nur der Schalter 58 des ersten Druckübersetzers 54 geschlossen ist.

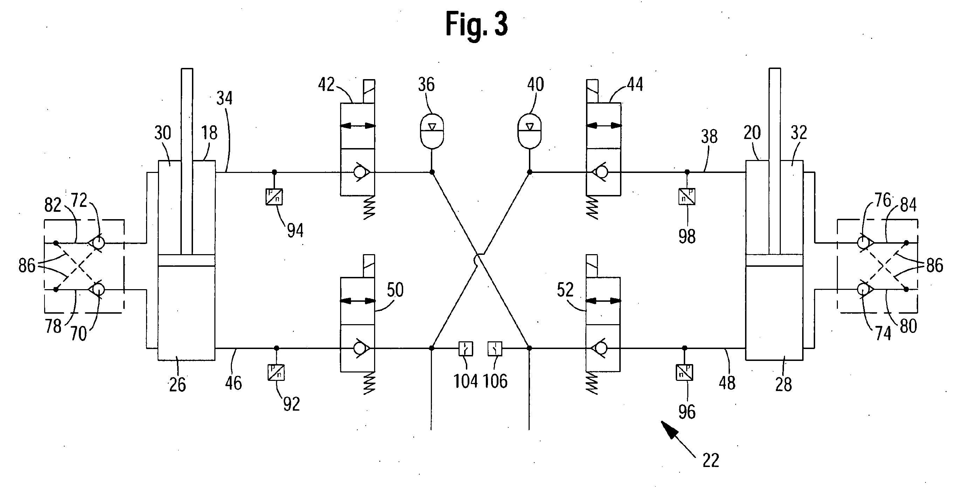

In einem weiteren Ausführungsbeispiel, wie es in Figur 3 dargestellt ist, erfolgt die Lastzustandserkennung mittels vier Drucksensoren, 92, 94, 96, 98, die anstelle der Druckübersetzer 54, 56 angeordnet sind, wobei die Drucksensoren 92, 94, 96, 98 die in den Kammern 26, 30, 28, 32 der Hydraulikzylinder 18, 20 herrschenden Drücke erfassen. Eine entsprechende Bewertung der gemessenen Drücke ermöglicht einen Rückschluss auf die an den Kolbenstangen der Hydraulikzylinder 18, 20 wirkenden Kräfte, so dass Zug- und Druckkräfte lastabhängig detektierbar sind.

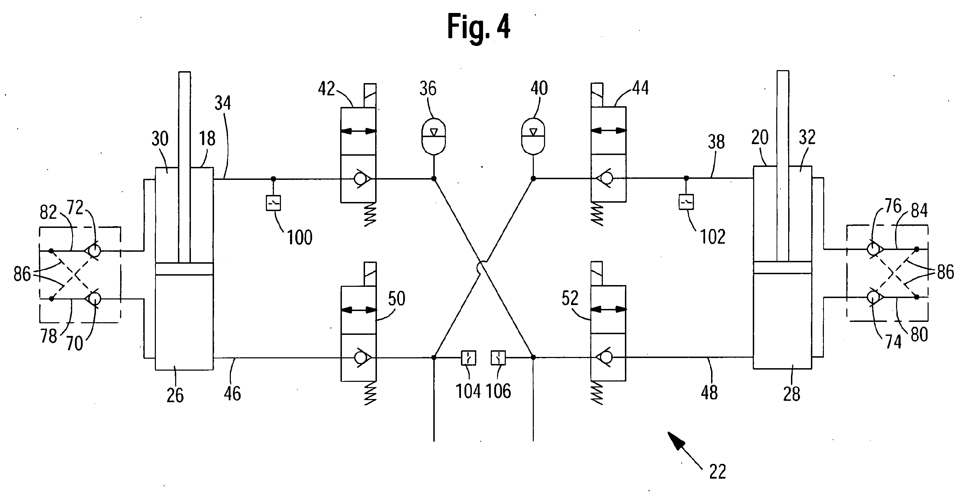

Ein weiteres Ausführungsbeispiel wird in Figur 4 gezeigt, in der ein erster Druckschalter 100 zwischen der kolbenstangenseitigen Kammer 30 des ersten Hydraulikzylinders 18 und dem Schaltventil 42 und ein zweiter Druckschalter 102 zwischen der kolbenstangenseitigen Kammer 32 des zweiten Hydraulikzylinders 20 und dem Schaltventil 44 angeordnet sind. Sollte hier ein bestimmter Druck, der nur durch eine ziehende Kraft an der Kolbenstange erzeugt werden kann, in einer der kolbenstangenseitigen Kammern 30, 32 überschritten werden, schließen oder besser öffnen die Druckschalter 100, 102 und der Zustand wird als unsicher für das Fahrzeug 10 detektiert. Es ist selbstverständlich denkbar, dass Drucksensoren die Aufgaben der Druckschalter 100, 102 übernehmen. Da eingespannte Drücke nur begrenzt als solche berücksichtigt werden bzw. erkannt werden können, wird ein entsprechendes Aktivierungskriterium für die Federung mit einem Sicherheitsaufschlag belegt.

In einem anderen Ausführungsbeispiel können die an den Kolbenstangen wirkende Kräfte auch mittels Kraftsensoren (nicht gezeigt) direkt oder indirekt gemessen bzw. erfasst und ausgewertet werden und so die an den Hydraulikzylindern 18, 20 bzw. die am Fahrzeug 10 wirkenden Lastzustände detektiert werden. Eine direkte Messung wären hier beispielsweise die Lagerkräfte der Anlenkpunkte der Hydraulikzylinder 18, 20 die Zugkräfte an den Kolbenstangen darstellen können. Eine indirekte Messung kann erfolgen, indem man die Durchbiegung oder Torsion verschiedener Bereiche der Achse 14, 16 oder des Rahmens 12 misst, und daraus auf den Lastzustand des Fahrzeugs 10 zurückschließt.

Die oben beschriebenen Ausführungsbeispiele umfassen ein Federungssystem 22 mit hydraulischer Wankstabilisierung und Mitteln zur Lastzustandsdetektion, wobei beide Hydraulikzylinder 18, 20 mit leckagefreien Schaltventilen 42, 50 bzw. 44, 52 derart abgesichert sind, dass sie sich nicht bewegen können, wenn die Federung nicht aktiv geschaltet ist und die Schaltventile 42, 44, 50, 52 geschlossen sind. Die kolbenstangenseitige Kammer 30 des ersten Hydraulikzylinders 18 ist mit den kolbenseitigen Kammer 28 des zweiten Hydraulikzylinders 20 und die kolbenstangenseitige Kammer 32 des zweiten Hydraulikzylinders 20 ist mit der kolbenseitigen Kammer 26 des ersten Hydraulikzylinders 18 verbunden, so dass die Hydraulikzylinder 18, 20 bei eingeschalteter Federung sich gegenseitig beeinflussen und eine Wankstabilisierung darstellen können, wenn die Schaltventile 42, 44, 50, 52 entsprechend geschaltet sind. Da beide Hydraulikzylinder 18, 20 beweglich angeordnet sind, sind entsprechende sich bewegende Teile der Hydraulikleitungen 34, 46 sowie 38, 48 als Schläuche ausgebildet. Um ein Absacken des Rahmens im Falle eines Rohrbruchs auszuschließen, müssen an den Hydraulikzylindern 18, 20 sowohl die leckagefreien Schaltventile 42, 44, 50, 52 als auch die jeweiligen entsperrbaren Rückschlagventile 70, 72, 74, 76 derart angebracht sein, dass keine Schläuche als Verbindungselemente zwischen diesen Bauteilen vorhanden sind. Die Hydraulikspeicher 36, 40 können jeweils irgendwo zwischen den kolbenstangenseitigen Schaltventilen 42, 44 und den kolbenseitigen Schaltventilen 50, 52 angeordnet sein.

Die miteinander in Verbindung stehenden Hydraulikleitungen 34 und 48 werden über einen Druckschalter 104 und die miteinander in Verbindung stehenden Hydraulikleitungen 38 und 46 über einen Druckschalter 106 überwacht und dienen als elektronische Rohrbruchsicherung, die gewährleistet, dass ein bei einem Rohrbruch eintretender Druckabfall sofort von einer im Federungssystem 22 implementierten elektronischen Steuereinheit 107 erfasst wird und entsprechende Steuermaßnahmen ergriffen bzw. von der elektronischen Steuereinheit 107 entsprechende Steuerbefehle für die Schaltventile 42, 44, 50, 52 generiert werden, um den Rahmen 12 des Fahrzeugs 10 in seiner Position zu halten. Die Druckschalter 104, 106 können dabei auch als Drucksensoren ausgebildet sein.

Auf eine detaillierte Beschreibung der elektronischen Steuereinheit 107 wird hier verzichtet, da der Einsatz von elektronischen Steuereinheiten 107 in hydraulischen Federungssystemen 22 sowie die Generierung entsprechender Steuerbefehle durch elektronisch ausgebildete Steuereinheiten 107 Stand der Technik ist und von einem auf dem Gebiet der elektrohydraulischen Steuerungstechnik tätigen Durchschnittsfachmann auf einfache Weise umgesetzt werden kann. Es ist dabei selbstverständlich anzunehmen, dass alle schaltungsrelevanten Schaltventile über durch die elektronische Steuereinheit generierte Steuersignale ansteuerbar sind. Ferner ist selbstverständlich anzunehmen, dass die elektronische Steuereinheit 107 entsprechende Signale empfängt und zur Generierung von Steuersignalen heranzieht, wobei Signale zur Generierung von Steuersignalen für die jeweiligen beschriebenen Ausführungsbeispiele durch die in den Figuren 2 bis 5 dargestellten und aus elektronischer und/oder elektrohydraulischer Sicht schaltungsrelevanten Sensoren bzw. Schaltern (58, 60, 92, 94, 96, 98, 100, 102, 104, 106) ausgehen. Die Darstellung der elektronischen Steuereinheit 107 wurde aus Gründen der Vereinfachung nur in der Figur 5 vorgenommen, wobei auch die anhand der übrigen Figuren dargestellten Ausführungsbeispiele eine entsprechende elektronische Steuereinheit 107 beinhalten sollen.

Der grundlegende hydraulische Schaltplan für eine Vorderachsfederung mit hydraulischer Wankstabilisierung wurde oben bereits anhand der Figuren 2 bis 4 beschrieben, wobei auf die Ausführungsbeispiele zur Steuerventileinrichtung 24, mit der die hydraulische Versorgung des Federungssystems 22 realisierbar ist, im Folgenden anhand der Figuren 5 und 6 näher eingegangen werden soll.

Figur 5 zeigt den für die bisherigen Ausführungsbeispiele herangezogenen hydraulischen Schaltplan des Federungssystem 22 (wobei hier auf die erneute Darstellung der Komponenten zur Detektion des Lastzustands verzichtet wird) in Verbindung mit einem Ausführungsbeispiel für die Steuerventileinrichtung 24. Die Steuerventileinrichtung 24 weist einen ersten und einen zweiten Steuerzweig 108, 110 auf, wobei die Steuerzweige 108, 110 parallel zueinander ausgerichtet und von einer gemeinsamen Hydraulikpumpe 112 versorgt werden. Der erste Steuerzweig 108 weist eine mit einem ersten Zuflusssteuerventil 114 versehene erste Zuflussleitung 116, eine mit einem ersten Abflusssteuerventil 118 sowie einer ersten Drossel oder Blende 120 versehene erste Abflussleitung 122 und eine erste Versorgungsleitung 124 auf, wobei die erste Zuflussleitung 116 und die erste Abflussleitung 122 in einer Verbindungsstelle 126 mit der ersten Versorgungsleitung 124 verbunden sind. Der zweite Steuerzweig 110 weist eine mit einem zweiten Zuflusssteuerventil 128 versehene zweite Zuflussleitung 130, eine mit einem ersten Abflusssteuerventil 132 sowie einer zweiten Drossel oder Blende 134 versehene zweite Abflussleitung 136 und eine zweite Versorgungsleitung 138 auf, wobei die zweite Zuflussleitung 130 und die zweite Abflussleitung 136 in einer Verbindungsstelle 140 mit der zweiten Versorgungsleitung 138 verbunden sind. Die Abflussleitungen 122, 136 münden jeweils in den Hydrauliktank 88. Die erste Zuflussleitung 116 ist mit einem in Richtung des ersten Zuflusssteuerventils 114 schließenden ersten Rückschlagventil 142 und die zweite Zuflussleitung 130 mit einem in Richtung des zweiten Zuflusssteuerventils 114 schließenden zweiten Rückschlagventil 144 versehen. Ferner ist eine Load-Sensing Einrichtung 146 (Last- bzw. Druckerfassungseinrichtung) vorgesehen, die, über ein Wechselventil 148 verzweigt, den jeweils höchsten hydraulischen Druck der Zuflussleitungen 116, 130 an die Hydraulikpumpe 112 meldet, so dass die als variierbares Verstellpumpensystem ausgebildete Hydraulikpumpe 112 ein entsprechendes Drucksignal erfährt. Eine Pumpenleitung 150 und eine Tankleitung 152 verbinden die beiden Zuflusssteuerventile 114, 128 mit der Hydraulikpumpe 112 bzw. mit dem Tank 88. Die Rückschlagventile 142, 144 sind zwischen den entsprechenden Verbindungsstellen 126, 140 und den Zuflusssteuerventilen 114, 128 angeordnet, wobei die Load-Sensing Einrichtung 146 zwischen den Rückschlagventilen 142, 144 und den Zuflusssteuerventilen 114, 128 den Druck in den Zuflussleitungen 116, 130 abgreift. Die Zuflusssteuerventile 114, 128 sind als 3/2-Schaltventile ausgebildet, wobei in einer Zuflussstellung dem Federungssystem 22 Hydraulikflüssigkeit zugeführt wird und in einer Entlastungsstellung die sich in der Zuflussleitung 116, 130 befindliche Hydraulikflüssigkeit in den Hydrauliktank 88 abfließen kann. Dadurch wird gleichzeitig die Load-Sensing Einrichtung 146 entspannt bzw. der sich in der Load-Sensing Einrichtung aufgebaute Druck abgebaut. Die Abflusssteuerventile 118, 132 sind als 2/2 Schaltventile ausgebildet und weisen jeweils eine Durchflussstellung in beide Leitungsrichtungen und eine in Richtung zum Hydrauliktank 88 schließende leckagefreie Schließstellung auf. Zur Druckerhöhung eines Steuerzweigs 108, 110 wird das entsprechende Zuflusssteuerventil 114, 128 in eine in Richtung der Hydraulikpumpe 112 geöffnete und zum Hydrauliktank 88 geschlossene Stellung geschaltet und die entsprechenden Abflusssteuerventile 118, 132 in ihre entsprechende Schließstellung gebracht. Für eine Druckreduzierung wird das entsprechende Zuflusssteuerventil 114, 128 in eine in Richtung zur Hydraulikpumpe 112 geschlossene und zum Hydrauliktank 88 geöffnete Stellung und gleichzeitig das Abflusssteuerventil 118, 132 in Durchlassstellung gebracht. Die Steuerungsprozedur für eine Druckerhöhung als auch für eine Druckreduzierung kann je nach Steuerungsbedarf sowohl für nur einen Steuerzweig 108, 110 allein, als auch für beide Steuerzweige 108, 110 gemeinsam erfolgen. Ferner kann in einem Steuerzweig 108, 110 eine Druckerhöhung erfolgen, während in dem entsprechend anderen Steuerzweig 108, 110 eine Druckreduzierung stattfindet.

Die oben beschriebene Steuerventileinrichtung 24 erfüllt grundsätzlich alle erforderlichen Funktionen, wobei die Volumenströme gegebenenfalls noch mittels Stromregelventile (nicht gezeigt) für die Elektronik regelbarer gestaltet werden können.

In Figur 6 ist ein weiteres Ausführungsbeispiel für eine Steuerventileinrichtung 24' dargestellt. Hierbei sind die Hydraulikzylinder 18, 20 mit unabhängig von einander einstellbaren Volumenströmen ansteuerbar. Dieses ist besonders während eines Ladevorgangs wichtig, damit die Hydraulikzylinder 18, 20 mehr oder weniger gleichmäßig und gleichzeitig ausfahren können. Auch ist es von Interesse, dass Druckanpassungsoperationen ruckfrei vorgenommen werden können. Dieses wiederum führt zu einer Verbesserung des Fahrkomforts und der Fahrsicherheit.

Die in Figur 6 dargestellte Steuerventileinrichtung 24' kann in gleicher Weise wie die Steuerventileinrichtung 24 in allen vorangehend beschriebenen Ausführungsbeispielen für ein Federungssystem 22 verwendet werden. Im Wesentlichen unterscheidet sich die in Figur 6 dargestellte Steuerventileinrichtung 24' von dem vorherigen Ausführungsbeispiel dadurch, dass anstelle von ON/OFF-Schaltventilen, das erste und zweite Zuflusssteuerventil 114 und 128 als erstes und zweites Proportionalzuflusssteuerventil 154 bzw. 156 ausgebildet ist, wobei diese Proportionalzuflusssteuerventile 154, 156 zwischen einer in Richtung der Hydraulikpumpe 112 geöffneten und zum Hydrauliktank 88 geschlossenen und einer in Richtung zur Hydraulikpumpe 112 geschlossenen und zum Hydrauliktank 88 geöffneten Stellung elektromagnetisch steuerbar sind. Ferner sind in den Abflussleitungen 122, 136 das erste und zweite Abflusssteuerventil 118, 132 um jeweils ein weiteres erstes und zweites Proportionalabflusssteuerventil 158 und 160, welche beide zwischen einer beidseitigen Schließstellung und einer beidseitigen Durchlassstellung steuerbar sind, ergänzt worden. In den Abflussleitungen 122, 136 sind ebenfalls leckagefreie Abflusssteuerventile 118, 132 von Vorteil, da herkömmliche Proportionalventile oftmals nicht leckagefrei sind. Selbstverständlich ist es denkbar, dass hier, wie auch in den vorhergehenden Figuren, leckagefreie Schaltventile durch entsperrbare Rückschlagventile ersetzt werden, die mittels geeigneter Maßnahmen angesteuert werden. Wichtig ist nur, dass die Verbindung leckagefrei verschlossen und bei Bedarf geöffnet werden kann. Bei Einsatz der Proportionalabflusssteuerventile 158, 160 können die in Figur 5 vorgesehenen Drosseln bzw. Blenden 120, 134 entfallen.

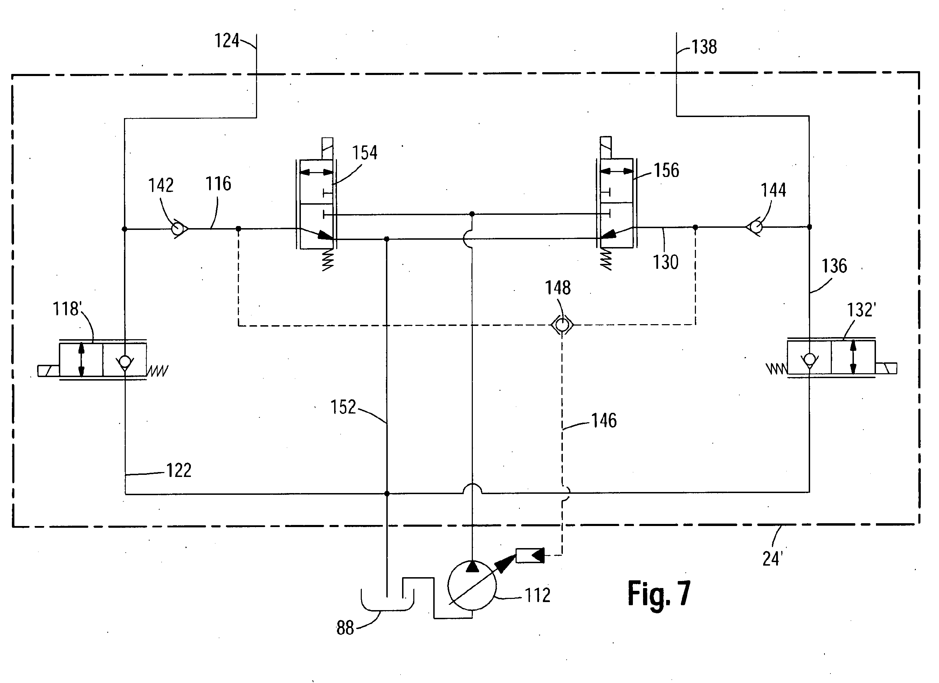

In einer zu Figur 6 alternativen Ausführungsform, wie sie in Figur 7 dargestellt ist, können auch leckagefreie Proportionalabflusssteuerventile 118', 132' eingesetzt werden, die die erforderliche Drossel- bzw. Blendenfunktion beinhalten.

Bei einer Druckerhöhung für das Federungssystem 22 bzw. im Zustand eines Ladevorgangs kann die zuströmende Hydraulikflüssigkeit mittels des ersten und zweiten Proportionalzuflusssteuerventils 154, 156 je nach Bedarf verändert werden. Die abflussseitigen Ventile 118, 132, 158, 160 befinden sich in Schließstellung. Somit wird nicht unbedingt der Hydraulikflüssigkeitsstrom, sondern vielmehr die Verfahrgeschwindigkeit der Hydraulikzylinder 18, 20 veränderbar. Der benötigte größte Lastdruck wird wie bei den Ausführungsbeispielen aus Figur 5 mittels der Load-Sensing Einrichtung 146 in Verbindung mit dem Wechselventil 148 an die verstellbare Hydraulikölpumpe 112 gemeldet.

Zur Verringerung des Drucks im Federungssystem 22 wird zuerst das leckagefreie Abflusssteuerventil 118, 132 und dann das Proportionalabflusssteuerventil 158, 160 geöffnet, so dass kontrolliert Hydraulikflüssigkeit zum Hydrauliktank 88 abfließen kann. Das Proportionalzuflusssteuerventil 154, 156 wird zur Entlastung des Load-Sensing Drucks in seine in Richtung zur Hydraulikpumpe 112 geschlossene und zum Hydrauliktank 88 geöffnete Stellung verfahren, wobei beide Steuerzweige 108, 110 auf analoge Weise, jedoch unabhängig voneinander, ansteuerbar sind. Als Maß für die Einstellung des Proportionalabflusssteuerventils 158, 160 dient hier ebenfalls wieder die Verfahrgeschwindigkeit des jeweiligen Hydraulikzylinders 18, 20. Ob sich das Proportionalabflusssteuerventil 158, 160 vor oder hinter dem Abflusssteuerventil 118, 132 befindet, ist grundsätzlich egal, da es keine Auswirkung auf die Funktion hat.

Wie schon erwähnt, ist sowohl mit der anhand Figur 5 beschriebenen Steuerventileinrichtung 24 als auch mit der anhand Figur 6 beschriebenen Steuerventileinrichtung 24' eine unabhängige Ansteuerung beider Steuerzweige 108, 110 möglich, so dass in einem Steuerzweig 108 eine Druckerhöhung und gleichzeitig eine Druckverminderung im anderen Steuerzweig 110 erzielbar ist, und umgekehrt. Ferner ist auch eine gleichzeitige Druckerhöhung oder eine gleichzeitige Druckverminderung in beiden Steuerzweigen 108, 110 erzielbar. Entsprechende Steuerungsprozeduren sind in der elektronischen Steuereinheit 107 hinterlegt und können durch entsprechende Hebel oder Schalter (nicht gezeigt) zur Aktivierung und/oder Steuerung des Federungssystems 22 abgerufen werden.

Im Folgenden soll die Funktion des Federungssystems 22 anhand Figur 5 beschrieben werden, wobei auf eine erneute Darstellung und Beschreibung der Lastfallerkennung verzichtet wird, da dieses oben bereist ausführlich beschrieben worden ist. Es sei nochmals darauf hingewiesen, dass sowohl die Steuerventileinrichtung 24 gemäß Figur 5 als auch die Steuerventileinrichtung 24' gemäß Figur 6 einsetzbar und anwendbar ist. Es wird weiter davon ausgegangen, dass der Lastfall entsprechend als sicher erkannt wird und daher die Federung aktiviert werden kann.

Figur 5 zeigt das Federungssystem 22 im Ausgangszustand, wobei der Rahmen 12 auf den beiden Hydraulikzylindern 18, 20 mehr oder weniger gleichmäßig ruht und ein bestimmter Druck in beiden Hydraulikzylindern 18, 20 eingespannt ist. In diesem Zustand des Federungssystems 22 sind alle Schaltventile 42, 44, 50, 52 geschlossen, die Zuflusssteuerventile 114, 128 bzw. 154, 156 in ihrer in Richtung zur Hydraulikpumpe 112 geschlossenen und zum Hydrauliktank 88 geöffneten Stellung, die Abflusssteuerventile 118, 132 bzw. 158, 160 in ihrer Schließstellung, die beiden Hydraulikspeicher 36, 40 entleert und der Lastzustand durch die Mittel zur Detektion des Lastzustands (in Figur 5 nicht gezeigt) als unkritisch bewertet.

Bei Aktivierung des Federungssystems 22 erfolgt ein Speicherladezustand. Der Speicherladezustand bzw. die Aktivierung der Federung wird vom Maschinenbediener oder aber von der elektronischen Steuereinheit 107 geschwindigkeitsabhängig oder sonst wie ausgelöst, sofern ein unkritischer Lastzustand eingenommen wurde bzw. vorliegt.

Dazu werden die beiden kolbenstangenseitigen Schaltventile 42, 44 in Durchlassstellung gebracht und eine Verbindung der kolbenstangenseitigen Kammern 30, 32 mit der Steuerventileinrichtung 24 bzw. 24' hergestellt. Gleichzeitig schalten die beiden Zuflusssteuerventile 114, 128 bzw. 154, 156 in ihre in Richtung der Hydraulikpumpe 112 geöffnete und zum Hydrauliktank 88 geschlossene Schaltstellung und bilden zunächst eine Verbindung der Pumpenleitung 150 mit dem Federungssystem 22. Das Hydrauliköl strömt nun über die Pumpenleitung 150, die Zuflusssteuerventile 114, 128, die Zuflussleitungen 116, 130, die Rückschlagventile 142, 144 und die Versorgungsleitungen 124, 138, in die Hydraulikspeicher 36, 40. Gleichzeitig wird eine Verbindung zur Load-Sensing Einrichtung 146 hergestellt, so dass über das Wechselventil 148 der höchste Verbraucherdruck an die Hydraulikpumpe 112, welche vorzugsweise als Verstellpumpensystem ausgebildet ist, gemeldet werden kann. Die Rückschlagventile 142, 144 sind erforderlich, um die Leckagerate gering zu halten und eine Möglichkeit der bedarfsgemäßen Load-Sensing-Signalerfassung zwischen Zuflusssteuerventil 114, 128, bzw. 154, 156 und Verbraucher bzw. Hydraulikzylinder 18, 20 herstellen zu können. Wichtig ist, dass kein Load-Sensing-Signal erzeugt wird, wenn das Zuflusssteuerventil 114, 128 bzw. 154, 156 in seiner in Richtung der Hydraulikpumpe 112 geschlossenen Stellung ist. Während die Hydraulikflüssigkeit zu den Hydraulikspeichern 36, 40 und den kolbenstangenseitigen Kammern 30, 32 der Hydraulikzylinder 18, 20 strömt, erhöht sich zwangsläufig der Druck im System.

Sind die Drücke in den kolbenstangenseitigen Kammern 30, 32 auf den gleichen Wert wie in den kolbenseitigen Kammern 26, 28 angestiegen, strömt die Hydraulikflüssigkeit über die Rückschlagventile der kolbenseitigen Schaltventile 50, 52 in die kolbenseitigen Kammern 26, 28 der Hydraulikzylinder 18, 20 und fährt diese aus. Die Gestaltung dieser Rückschlagventile kann natürlich auch auf andere Art geschehen, indem man beispielsweise ein doppelseitig leckagefreies Schaltventil verwendet und in eine Umgehungsleitung einbaut. Wichtig ist, dass eine leckagefreie Verbindung hergestellt wird, die nur in eine Richtung Hydraulikflüssigkeit durchlässt und bei Bedarf beidseitig geöffnet werden kann.

Das Ausfahren der Hydraulikzylinder 18, 20 kann mittels eines Weg- oder Winkelsensors (nicht gezeigt) erfasst werden und dann die beiden kolbenseitigen Schaltventile 50, 52 geöffnet werden. Gleichzeitig werden die Zuflusssteuerventile 114, 128 bzw. 154, 156 der Steuerventileinrichtung 24 bzw. 24' geschlossen, da keine weitere Hydraulikflüssigkeit benötigt wird. Bei ungleicher Beladung des Fahrzeugs 10 kann es passieren, dass ein Hydraulikzylinder 18, 20 zuerst ausfährt, so dass die Zuflusssteuerventile 114, 128 bzw. 154, 156 auch einzeln ausgeschaltet werden müssen, was der grundlegenden Funktion des Federungssystems 22 jedoch nicht schadet. Wichtig ist, dass die Hydraulikzylinder 18, 20 ausfahren, bevor alle Schaltventile 42, 44, 50, 52 an den Hydraulikzylindern 18, 20 geöffnet werden, denn nur so kann gewährleistet werden, dass der Rahmen 12 weder absackt noch hochspringt. Um den Prozess des Ladens und Ausfahrens der Hydraulikzylinder 18, 20 besser beherrschbar zu machen, ist es denkbar, Stromregelventile (nicht gezeigt) einzusetzen, die den zuströmenden Volumenstrom der Hydraulikflüssigkeit konstant halten. Sind alle Schaltventile 42, 44, 50, 52 an den Hydraulikzylindern 18, 20 geöffnet, befindet sich das Fahrzeug 12 im Federungszustand, da beide Hydraulikzylinder 18, 20 sich frei bewegen können.

Die hydraulische Wankstabilisierung funktioniert nun so, dass, wenn beispielsweise der an der Vorderachse 14 angeordnete erste Hydraulikzylinder 18 aufgrund einer Fahrbahnanregung einfährt, zum einen der Stoß über den zweiten Hydraulikspeicher 40 abgedämpft und sanft wieder an die Vorderachse 14 zurückgegeben wird und zum anderen gleichzeitig der zweite Hydraulikzylinder 20 durch den Druckanstieg in der kolbenstangenseitigen Kammer 32 eingefahren wird. Es wird einem Hin- und Herschwanken des Rahmens 12 entgegengewirkt. In diesem Federungszustand sind Anpassungen an sich ändernde Lastzustände jederzeit möglich. Damit dieses geschehen kann, sind, wie bereits oben erwähnt, zwei Weg- oder Winkelsensoren erforderlich, mit denen die Position der Vorderachse 14 relativ zum Rahmen 12 bestimmt und überwacht werden kann. Erhöht sich die Last durch Aufnahme einer Nutzlast, kann der Druck in den kolbenseitigen Kammern 26, 28 der Hydraulikzylinder 18, 20 gemäß dem oben beschriebenen Verfahren erhöht werden. Hierbei werden die Zuflusssteuerventile 114, 128 bzw. 154, 156 geschaltet, wie beim Speicherladevorgang. Selbstverständlich kann es auch sein, dass nur eine Seite mehr Druck benötigt, weswegen natürlich auch nur eines der beiden Zuflusssteuerventile 114, 128 bzw. 154, 156 verwendet werden kann. Verringert sich hingegen die Last durch Abgabe einer Nutzlast, kann der Druck in den kolbenseitigen Kammern 26, 28 der Hydraulikzylinder verringert werden. Dieses erfolgt dadurch, dass Hydraulikflüssigkeit aus dem Federungssystem abgelassen wird, wobei auch hier ein beidseitiges oder auch nur ein einseitiges Ablassen erfolgen kann. Der Ablassvorgang erfolgt durch Schalten der Schaltventile 42, 44, 50, 52 in die Durchlassstellung, so dass die hydraulischen Verbindungen zu den Kammern 26, 28, 30, 32 beidseitig geöffnet sind, und durch Schalten der Abflusssteuerventile 118, 132 bzw. 158, 160 in ihre Durchlassstellung, wobei die Zuflusssteuerventile 114, 128 bzw. 154, 156 in der in Richtung zur Hydraulikpumpe 112 geschlossenen und zum Hydrauliktank 88 geöffneten Stellung geschaltet sind. Die in der Steuereinrichtung 24 angeordneten Drosseln bzw. Blenden 120, 134 dienen dazu, dass die Hydraulikflüssigkeit nicht zu schnell abfließen kann, so dass der Prozess beherrschbar bleibt. Bei der Ausführungsform mit der Steuereinrichtung 24' übernehmen die dort angeordneten Proportionalabflusssteuerventile 158, 160 diese Funktion. Anstelle der Drosseln oder Blenden 120, 134 wäre es auch denkbar, geeignete kleine Schaltventile zu verwenden, oder vor oder hinter dem Abflusssteuerventil 118, 132 Stromregelventile anzuordnen.

Ferner kann im Federungszustand auch eine Anpassung an einen asymmetrischen Beladungszustand erfolgen, wenn beispielsweise Lasten mit außermittigem Schwerpunkt transportiert werden oder das Fahrzeug sich seitlich an einem Hang bewegt. Dazu wird in der Steuerventileinrichtung 24 bzw. 24', je nach Beladungszustand, der eine Steuerzweig 108, 110 in Zuflussstellung und der andere Steuerzweig 108, 110 in Abflussstellung betrieben. Beispielsweise muss im Federungszustand, d. h. wenn alle Schaltventile 42, 44, 50, 52 in Durchflussstellung sind, zur Korrektur des Beladungszustands der erste Hydraulikzylinder 18 ausgefahren bzw. der zweite Hydraulikzylinder 20 eingefahren werden. In diesem Fall wird der erste Steuerzweig 108 in Zuflussstellung betrieben, d. h. das erste Zuflusssteuerventil 114 bzw. 154 in seine in Richtung zur Hydraulikpumpe 112 geöffnete und zum Hydrauliktank 88 geschlossene Stellung geschaltet, wobei sich das erste Abflusssteuerventil 118 in Schließstellung befindet. Gleichzeitig wird der zweite Steuerzweig 110 in Abflussstellung betrieben d. h. das zweite Zuflusssteuerventil 128 bzw. 156 in seine in Richtung zur Hydraulikpumpe 112 geschlossene und zum Hydrauliktank 88 geöffnete Stellung geschaltet, wobei sich das zweite Abflusssteuerventil 118 bzw. 160 in Durchflussstellung befindet. Die Load-Sensing Einrichtung 146 meldet in diesem Zustand einen Druck in dem ersten Steuerzweig 108, der an die Hydraulikpumpe 112 weitergeleitet wird, hingegen die Load-Sensing Einrichtung 146 bezüglich des zweiten Steuerzweigs 110 entlastet ist. Die über den ersten Steuerzweig 108 geförderte Hydraulikflüssigkeit kann in die kolbenseitige Kammer 26 des ersten Hydraulikzylinders 18 und in die kolbenstangenseitige Kammer 32 des zweiten Hydraulikzylinders 20 strömen, wodurch der erste Hydraulikzylinder 18 angehoben und der zweite Hydraulikzylinder 20 eingefahren wird. Für den entgegengesetzten Fall wird auf entsprechend analoge Weise der zweite Steuerzweig 110 in Zuflussstellung und der erste Steuerzweig 108 in Abflussstellung betrieben.

Wenn die Vorderachse 14 des Fahrzeugs 10 gefedert wird und im normalen Arbeitsbetrieb Lasten auf dieser Vorderachse 14 abstützen, können Maßnahmen erforderlich sein, die eine Standsicherheit und Fahrsicherheit des Fahrzeugs 10 sicherstellen. So kann es erforderlich sein, dass jedes Mal nach einer Deaktivierung des Federungssystems (Schalten der Schaltventile 42, 44, 50, 52 in Schließstellung) die Hydraulikspeicher 36, 40 entladen werden. Grund dafür ist der Speicherladevorgang, da dieser vorzugsweise derart durchgeführt wird, dass der Druck in den Hydraulikspeichern 36, 40 geringer als in den jeweiligen kolbenseitigen Kammern 26, 28 ist. Sollte der Druck in den Hydraulikspeichern 36, 40 höher sein, würden beim Öffnen der kolbenstangenseitigen Schaltventile 42, 44 die Hydraulikzylinder 18, 20 unkontrolliert ausfahren, was ein Sicherheitsrisiko darstellt, welches zu vermeiden ist. Somit sollte der Druck aus den Hydraulikspeichern 36, 40 immer auf einen ausreichend niedrigen Wert abgelassen werden. Ausreichend niedrig bedeutet in diesem Zusammenhang nicht, dass eine völlige Entleerung sinnvoll wäre, da dies wiederum einen Hydraulikspeicher 18, 20, sollte er als Membran- oder Blasenspeicher ausgeführt sein, auf Dauer beschädigen kann. Mit Hilfe von Drucksensoren (nicht gezeigt) ist es denkbar hier gezielt einen Wert vorzugeben, durch den eine geringe Ladezeit für die Hydraulikspeicher 36, 40 erzielt wird.

Bei einem Laderfahrzeug mit einem ausfahrbaren Ausleger, wie beispielsweise ein Teleskoplader, stützt sich die Last am Fahrzeug 10 hauptsächlich über die gefederte Vorderachse 14 ab. Daher kann es sinnvoll sein, dass das Federungssystem 22 ab einer bestimmten Höhe des Auslegers abgeschaltet wird, da die Last mit zunehmendem Hebelarm das Fahrzeug 10 bei aktiviertem Federungssystem 22 aufschaukeln und umstürzen lassen könnte. Um dies zu verhindern kann zur Bestimmung der Hubhöhe oder Ausfahrlänge des Auslegers ein Positionssensor, Winkelsensor, Kontaktschalter oder sonstiges geeignetes Gerät (nicht gezeigt) installiert werden, dass der zur Steuerung des Federungssystems 22 vorgesehenen elektronischen Steuereinheit 107 ein verwertbares Kontrollsignal (Aktivierungs-/Deaktivierungssignal) zukommen lässt. Je nach Bedarf kann auch die Masse der Nutzlast bei der Aktivierung/Deaktivierung des Federungssystems 22 berücksichtigt werden.

Wie bereits beschrieben, ist die relative Position der Vorderachse 14 zum Rahmen 12 ein wichtiges Maß. Es kann daher sinnvoll sein, vor Aktivierung des Federungssystems 22 die Vorderachse 14 in eine vordefinierte Position zum Rahmen 12 zu bewegen, um beispielsweise genügend Federweg (Hubweg für die Hydraulikzylinder 18, 20) vorzusehen. Dieses kann anhand von Steuerungsventilen (nicht gezeigt) geschehen, mit denen die Hydraulikzylinder 18, 20 bei deaktivierter Federung (geschlossene Schaltventile 42, 44, 50, 52) über die entsperrbaren Rückschlagventile 70, 72, 74, 76 verstellt werden können. Die relative Position der Vorderachse 14 zum Rahmen 12 ist ferner wichtig, um eine Veränderungen durch Lastwechsel erkennen zu können. So wird eine Veränderung oder seitliche Verlagerung der Nutzlast als ein statisches Ein- oder Ausfedern des oder der Hydraulikzylinder 18, 20 erfasst und kann durch gezielte Druckerhöhung und Druckentlastung und der damit verbundenen Änderung der Hydraulikzylinderhübe ausgeglichen werden, so dass sich die Vorderachse 14 immer in einer optimierten Position relativ zum Rahmen 12 befindet. Zur Bestimmung der relativen Position der Vorderachse 14 zum Rahmen 12 sind verschiedene Methoden denkbar. So können Winkelmesser oder Wegmesser (nicht gezeigt) eingesetzt werden, um zu dem gewünschten Maßen zu kommen. Die Erfassung der relativen Position der Vorderachse 14 zum Rahmen 12 ermöglicht ferner einen Ausgleich der Vorderachse 14 bei deaktiviertem Federungssystem 22. Ein solcher Ausgleich ist sinnvoll, um die Stabilität des Fahrzeugs 10 am Hang zu erhöhen, da die Seitenneigung des Rahmens 12 verringert werden kann und so größere Lasten als normal in größere Höhen bewegt werden können. Auch ist es sinnvoll die gemessene bzw. erfasste Relativposition als Wert zur Beurteilung des Lastzustandes des Fahrzeugs 10 heranzuziehen. So können plötzliche, zu schnelle Bewegungen als Rohrbruch identifiziert und als zusätzliches Sicherheitsmerkmal herangezogen werden. Ferner kann so eine seitliche Überladung bzw. eine zu starke Hanglage des Fahrzeugs 10 identifiziert und das Federungssystem dann aus Sicherheitsgründen abgeschaltet und der Rahmen 12 wieder in eine sicherere Position verfahren werden.

Wie oben bereits beschrieben, muss der Rahmen 12 bei Aktivierung des Federungssystems angehoben werden. Hierzu, sowie für Anpassungen an veränderte Lastzustände, muss die erforderliche Hydraulikflüssigkeit bereitgestellt werden. Dieses wird grundsätzlich von einer Pumpe gemacht, die auch die restlichen Hydraulikfunktionen des Fahrzeugs 10 mit Hydraulikflüssigkeit versorgt. Wird das Federungssystem 22 während der Fahrt aktiviert, kann die plötzliche Leistungsentnahme vom Motor für die Hydraulik störend auf den Antrieb des Fahrzeugs 10 wirken. Es kann daher sinnvoll sein, mittels eines Speicherladeventils (nicht gezeigt) einen geeignet großen Hydraulikspeicher (nicht gezeigt) vorzusehen und vorzuspannen, der dann die erforderliche Hydraulikflüssigkeit für das Federungssystem 22 bereitstellt. In einem solchen Fall könnte man dann auf die Load-Sensing Einrichtung 146 verzichten, da ständig genügend Hydraulikflüssigkeit zur Verfügung stehen würde.

Bei Radladern ist es üblich, dass deren Auslegerfederung in Abhängigkeit von der Geschwindigkeit des Fahrzeugs zu- oder abgeschaltet werden, wobei bei Erreichen einer bestimmten Grenzgeschwindigkeit eine Abschaltung (Deaktivierung) der Federung erfolgt. Dies ist sinnvoll, da während der Fahrt keine präzisen Bewegungen ausgeführt werden müssen. Bei der Umsetzung auf einen Teleskoplader ist es etwas anders, da hier zwischen reiner Transportfahrt über Land mit Anhänger, Transportfahrt, um eine Last einige Meter von A nach B zu bewegen, und reiner Ladetätigkeiten zu unterscheiden ist. Es ist daher sinnvoll, für eine Achsfederung drei unterschiedliche Modi einzuführen:

Reine Lade-, Hub- und Grabarbeiten: Das Federungssystem 22 ist deaktiviert und die Hydraulikzylinder 18, 20 sind fest.

Kurze Transportfahrten einer Last von A nach B: Das Federungssystem schaltet sich unterhalb einer bestimmten Fahrgeschwindigkeit automatisch aus und oberhalb einer bestimmten Fahrgeschwindigkeit automatisch wieder an.

Lange Transportfahrten mit Anhänger über Land: Das Federungssystem 22 ist konstant aktiviert und schaltet sich nur aus, wenn vom System ein kritischer Lastzustand erkannt wird.

Die ständige Aktivierung des Federungssystems kann für längere Transportfahrten sinnvoll sein, da beispielsweise an Ampeln, Kreuzungen und Einmündungen keine Leistung vom Antriebsmotor für die Aktivierung des Federungssystems 22 abgenommen wird, während die ganze Leistung zur Beschleunigung des Fahrzeugs 10 und zum Ziehen des Anhängers einsetzbar ist.

Zur weiteren Unterdrückung von Wankbewegungen und zur Erhöhung der Stabilität des Fahrzeugs 10 ist es denkbar, die eigentlich pendelnd gelagerte Hinterachse 16 des Fahrzeugs 10 festzusetzen. Von Vorteil könnte dabei sein, dass die Gestaltung der Vorderachse 14 in einigen Punkten wesentlich vereinfacht werden könnte. So könnte beispielsweise auf eine Wankstabilisierung verzichtet werden. Nachteilig wäre hier jedoch, dass in einem solchen Fall Lastfälle, und damit Spannungen und Verformungen, auf den Rahmen 12 einwirken würden, die eine erhebliche und vor allem unübliche Belastung darstellen. Eine erhebliche Verstärkung und damit Neukonstruktion des Rahmens 12 wäre erforderlich. Auch eine Dämpfung der Pendelbewegungen der Hinterachse 16 würde diesen Effekt erzeugen. Zwar wären die Belastungen nicht so stark wie eine Festsetzung, jedoch wären auch hier Verstärkungen bisheriger Rahmenkonstruktionen erforderlich.

Hydraulikspeicher 36, 40 müssen gemäß einer Druckbehälterrichtlinie gegen Überdrücke abgesichert sein, weswegen, die in anhand der in den Figuren 1 bis 6 dargestellten Ausführungsbeispiele ein an den Hydraulikspeichern 36, 40 vorgesehenes Überdruckventil (nicht gezeigt) umfassen. Da dies ebenso wie ein Druckentlastungshahn zur Druckentlastung vor Wartungsarbeiten nicht funktional wichtig ist, wurde es nicht in die Figuren integriert.

In den Figuren 2 bis 5 ist jeweils ein Hydraulikspeicher 36, 40 pro Hydraulikzylinder 18, 20 eingezeichnet. Es ist jedoch ohne weiteres denkbar, mehrerer Hydraulikspeicher 36, 40 vorzusehen, die evtl. mit unterschiedlichen Vorspanndrücken versehen sind, um die Vorteile einer "variablen Federrate" für das Federungssystem 22 zu nutzen.

Auch wenn die Erfindung lediglich anhand nur einiger Ausführungsbeispiele beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

**Patentansprüche**

1. Federungssystem für ein land- oder bauwirtschaftliches Fahrzeug (10), insbesondere Laderfahrzeug, mit einem ersten und einem zweiten Hydraulikzylinder (18, 20), die einen Rahmen (12) des Fahrzeugs (10) gegenüber einer Achse (14, 16) des Fahrzeugs (10) abstützen, wobei die Hydraulikzylinder (18, 20) jeweils eine kolbenseitige Kammer (26, 28) und eine kolbenstangenseitige Kammer (30, 32) aufweisen und wobei die Hydraulikzylinder (18, 20) in einer Kreuzschaltung über eine erste Verbindungsleitung (34, 48) und über eine zweite Verbindungsleitung (38, 46) hydraulisch miteinander verbunden sind, so dass die kolbenseitige Kammer (26) des ersten Hydraulikzylinders (18, 20) mit der kolbenstangenseitigen Kammer (32) des zweiten Hydraulikzylinders (20) verbunden ist, und umgekehrt, einem ersten in der ersten Verbindungsleitung (34, 48) und einem zweiten in der zweiten Verbindungsleitung (38, 46) angeordneten Hydraulikspeicher (36, 40), einer Hydraulikquelle (112), einem Hydrauliktank (88), einer Steuerventileinrichtung (24, 24'), einer elektronischen Steuereinheit (107), elektrisch schaltbaren Schaltventilen (42, 44, 50, 52), die in der ersten und zweiten Verbindungsleitung (34, 48, 38, 46) zwischen den Hydraulikspeichern (36, 40) und den Kammern (26, 28, 30, 32) der Hydraulikzylinder (18, 20) angeordnet sind, und eine erste und zweite Versorgungsleitung (124, 138), die die Steuerventileinrichtung (24, 24') mit den Verbindungsleitungen (34, 48, 38, 46) verbinden, wobei die eine Versorgungsleitung (124) zwischen den Schaltventilen (44, 50) der einen Verbindungsleitung (38, 46) in die eine Verbindungsleitung (38, 46) und die andere Versorgungsleitung (138) zwischen den Schaltventilen (42, 52) der anderen Verbindungsleitung (34, 48) in die andere Verbindungsleitung (34, 48) mündet, **dadurch gekennzeichnet, dass** im Federungssystem (22) Mittel zur Detektion und Kompensation von Lastzuständen des Fahrzeugs (10) vorgesehen sind.

2. Federungssystem nach Anspruch 1, **dadurch gekennzeichnet, dass** die Mittel zur Detektion und Kompensation von. Lastzuständen Druckübersetzer (54, 56) sowie Mittel zur Erfassung der Position eines Druckübersetzers (54, 56) umfassen, wobei die Druckübersetzer (54, 56) jeweils zwischen der kolbenseitigen und kolbenstangenseitigen Kammer (26, 30, 28, 32) eines jeden Hydraulikzylinders (18, 20) angeordnet sind.

3. Federungssystem nach Anspruch 2, **dadurch gekennzeichnet, dass** das Flächenverhältnis der Druck erzeugenden Flächen in den Kammern (62, 64, 66, 68) eines Druckübersetzers (54, 56) dem Flächenverhältnis der Druck erzeugenden Flächen in den Kammern (26, 28, 30, 32) eines Hydraulikzylinders (18, 20) im Wesentlichen entspricht.

4. Federungssystem nach Anspruch 2 oder 3, **dadurch gekennzeichnet, dass** die Mittel zur Erfassung der Position eines Druckübersetzers (54, 56) einen Schalter (58, 60) oder Sensor umfassen.

5. Federungssystem nach Anspruch 1, **dadurch gekennzeichnet, dass** die Mittel zur Detektion und Kompensation von Lastzuständen Drucksensoren (92, 94, 96, 98) umfassen, mit denen der Druck in den einzelnen Kammern (26, 28, 30, 32) des ersten und zweiten Hydraulikzylinders (18, 20) erfassbar ist.

6. Federungssystem nach Anspruch 1, **dadurch gekennzeichnet, dass** die Mittel zur Detektion und Kompensation von Lastzuständen Druckschalter (100, 102) umfassen, die jeweils mit einer der stangenseitigen Kammern (30, 32) des Hydraulikzylinders (18, 20) in Verbindung stehen.

7. Federungssystem nach Anspruch 1, **dadurch gekennzeichnet, dass** die Mittel zur Detektion und Kompensation von Lastzuständen Kraftsensoren umfassen, mit denen an den Hydraulikzylindern (18, 20) wirkende Kräfte indirekt oder direkt detektierbar sind.

8. Federungssystem nach einem der Ansprüche 1 bis 7, **dadurch gekennzeichnet, dass** die Schaltventile (42, 44, 50, 52) eine Durchflussstellung und eine Schließstellung aufweisen, wobei die Schließstellung ein in Richtung der Kammer (26, 28, 30, 32) öffnendes Rückschlagventil umfasst.

9. Federungssystem nach einem der Ansprüche 1 bis 7, **dadurch gekennzeichnet, dass** die Schaltventile (42, 44, 50, 52) eine Durchflussstellung und eine in beide Richtungen schließende Schließstellung aufweisen und mit einem in Richtung der Kammer (26, 28, 30, 32) öffnendes Rückschlagventil parallel geschaltet sind.

10. Federungssystem nach einem der Ansprüche 1 bis 9, **dadurch gekennzeichnet, dass** die Versorgungs- oder Verbindungsleitungen (34, 48, 38, 46, 124, 138) mit Druckschaltern (104, 106) versehen sind.

11. Federungssystem nach einem der Ansprüche 1 bis 10, **dadurch gekennzeichnet, dass** die Steuerventileinrichtung (24, 24') eine erste in die eine Versorgungsleitung (124) mündende und eine zweite in die andere Versorgungsleitung (138) mündende Zuflussleitung (116, 130) sowie eine erste in die eine Versorgungsleitung (124) mündende und eine zweite in die andere Versorgungsleitung (138) mündende Abflussleitung (122, 136) umfasst, wobei die Zuflussleitungen (116, 130) über Zuflusssteuerventile (114, 128, 154, 156) mit der Hydraulikpumpe (112) oder dem Hydrauliktank (88) und die Abflussleitungen (122, 136) über Abflusssteuerventile (118, 132, 158, 160) mit dem Hydrauliktank (88) verbindbar sind.

12. Federungssystem nach Anspruch 11, **dadurch gekennzeichnet, dass** die Zuflusssteuerventile (114, 128) und/oder die Abflusssteuerventile (118, 132) Schaltventile umfassen.

13. Federungssystem nach Anspruch 11 oder 12, **dadurch gekennzeichnet, dass** die Zuflusssteuerventile (154, 156) und/oder die Abflusssteuerventile (158, 160) Proportionalventile umfassen.

14. Federungssystem nach einem der Ansprüche 11 bis 13, **dadurch gekennzeichnet, dass** eine Lasterkennungseinrichtung (146) vorgesehen ist, die einen Druck in der ersten oder zweiten Zuflussleitung (116, 130) erfasst.

15. Federungssystem nach einem der Ansprüche 11 bis 14, **dadurch gekennzeichnet, dass** die Zuflussleitungen (116, 130) mit einem in Richtung der Versorgungsleitungen (124, 138) öffnenden Rückschlagventil (142, 144) versehen sind.

16. Federungssystem nach einem der Ansprüche 11 bis 15, **dadurch gekennzeichnet, dass** die Abflussleitungen (122, 136) mit einer Drossel oder Blende (120, 134) versehen sind.

17. Federungssystem nach einem der Ansprüche 11 bis 16, **dadurch gekennzeichnet, dass** die Abflussleitungen (122, 136) mit einem Proportionalabflusssteuerventil (158, 160) versehen sind, vorzugsweise einem leckagefreien Proportionalabflusssteuerventil (118', 132').

18. Federungssystem nach einem der Ansprüche 1 bis 17, **dadurch gekennzeichnet, dass** die kolbenseitigen und die kolbenstangenseitigen Kammern (26, 30, 28, 32) der Hydraulikzylinder (18, 20) mit je einem entsperrbaren Rückschlagventil (70, 72, 74, 76) versehen sind, wobei das Rückschlagventil (70, 72, 74, 76) in Richtung der jeweiligen Kammer (26, 30, 28, 32) öffnet.

19. Land- oder bauwirtschaftliches Fahrzeug (10), insbesondere Laderfahrzeug, mit einer pendelnd gelagerten ersten Achse (16) und einer gefederten zweiten Achse (14), **dadurch gekennzeichnet, dass** zur Federung der zweiten Achse (14) ein Federungssystem (22) gemäß einem der Ansprüche 1 bis 18 vorgesehen ist.

**Claims**

1. Suspension system for an agricultural or construction industry vehicle (10), in particular a loader vehicle, with a first and a second hydraulic cylinder (18, 20), which support a chassis (12) of the vehicle (10) relative to an axle (14, 16) of the vehicle (10), the hydraulic cylinders (18, 20) each having a piston-side chamber (26, 28) and a piston rod-side chamber (30, 32), and the hydraulic cylinders (18, 20) being connected hydraulically to one another in a cross-connected circuit by a first connecting line (34, 48) and a second connecting line (38, 46), with the result that the piston-side chamber (26) of the first hydraulic cylinder (18, 20) is connected to the piston rod-side chamber (32) of the second hydraulic cylinder (20), and vice versa, with a first hydraulic accumulator (36), which is arranged in the first connecting line (34, 48) and a second hydraulic accumulator (40), which is arranged in the second connecting line (38, 46), with a hydraulic source (112), with a hydraulic tank (88), with a control valve device (24, 24'), with an electronic control unit (107), with electrically switchable on-off valves (42, 44, 50, 52), which are arranged in the first and the second connecting line (34, 48, 38, 46), between the hydraulic accumulators (36, 40) and the chambers (26, 28, 30, 32) of the hydraulic cylinders (18, 20), and a first and second supply line (124, 138), which connect the control valve device (24, 24') to the connecting lines (34, 48, 38, 46), one supply line (124) opening into one connecting line (38, 46) between the on-off valves (44, 50) of one connecting line (38, 46), and the other supply line (138) opening into the other connecting line (34, 48) between the on-off valves (42, 52) of the other connecting line (34, 48), **characterized in that** means for detecting and compensating for load states of the vehicle (10) are provided in the suspension system (22).

2. Suspension system according to Claim 1, **characterized in that** the means for detecting and compensating for load states comprise pressure intensifiers (54, 56) and means for detecting the position of a pressure intensifier (54, 56), the pressure intensifiers (54, 56) each being arranged between the piston-side and the piston rod-side chamber (26, 30, 28, 32) of each hydraulic cylinder (18, 20).

3. Suspension system according to Claim 2, **characterized in that** the area ratio of the pressure-generating surfaces in the chambers (62, 64, 66, 68) of a pressure intensifier (54, 56) corresponds substantially to the area ratio of the pressure-generating surfaces in the chambers (26, 28, 30, 32) of a hydraulic cylinder (18, 20).

4. Suspension system according to Claim 2 or 3, **characterized in that** the means for detecting the position of a pressure intensifier (54, 56) comprise a switch (58, 60) or sensor.

5. Suspension system according to Claim 1, **characterized in that** the means for detecting and compensating for load states comprise pressure sensors (92, 94, 96, 98), by means of which the pressure in the individual chambers (26, 28, 30, 32) of the first and the second hydraulic cylinder (18, 20) can be detected.

6. Suspension system according to Claim 1, **characterized in that** the means for detecting and compensating for load states comprise pressure switches (100, 102), each of which is connected to one of the rod-side chambers (30, 32) of the hydraulic cylinder (18, 20).

7. Suspension system according to Claim 1, **characterized in that** the means for detecting and compensating for load states comprise force sensors, by means of which forces acting on the hydraulic cylinders (18, 20) can be detected indirectly or directly.

8. Suspension system according to one of Claims 1 to 7, **characterized in that** the on-off valves (42, 44, 50, 52) have a throughflow position and a closed position, the closed position comprising a nonreturn valve that opens in the direction of the chamber (26, 28, 30, 32).

9. Suspension system according to one of Claims 1 to 7, **characterized in that** the on-off valves (42, 44, 50, 52) have a throughflow position and a closed position with closure in both directions and are connected in parallel with a nonreturn valve that opens in the direction of the chamber (26, 28, 30, 32).

10. Suspension system according to one of Claims 1 to 9, **characterized in that** the supply or connecting lines (34, 48, 38, 46, 124, 138) are provided with pressure switches (104, 106).

11. Suspension system according to one of Claims 1 to 10, **characterized in that** the control valve device (24, 24') comprises a first inflow line (116) opening into one supply line (124) and a second inflow line (130) opening into the other supply line (138), and a first outflow line (122) opening into one supply line (124) and a second outflow line (136) opening into the other supply line (138), it being possible for the inflow lines (116, 130) to be connected via inflow control valves (114, 128, 154, 156) to the hydraulic pump (112) or to the hydraulic tank (88), and for the outflow lines (122, 136) to be connected via outflow control valves (118, 132, 158, 160) to the hydraulic tank (88).

12. Suspension system according to Claim 11, **characterized in that** the inflow control valves (114, 128) and/or the outflow control valves (118, 132) comprise on-off valves.

13. Suspension system according to Claim 11 or 12, **characterized in that** the inflow control valves (154, 156) and/or the outflow control valves (158, 160) comprise proportional valves.

14. Suspension system according to one of Claims 11 to 13, **characterized in that** a load detection device (146), which detects a pressure in the first or second inflow line (116, 130), is provided.

15. Suspension system according to one of Claims 11 to 14, **characterized in that** the inflow lines (116, 130) are provided with a nonreturn valve (142, 144) that opens in the direction of the supply lines (124, 138).

16. Suspension system according to one of Claims 11 to 15, **characterized in that** the outflow lines (122, 136) are provided with a restrictor or orifice (120, 134).

17. Suspension system according to one of Claims 11 to 16, **characterized in that** the outflow lines (122, 136) are provided with a proportional outflow control valve (158, 160), preferably a leakage-free proportional outflow control valve (118', 132').

18. Suspension system according to one of Claims 1 to 17, **characterized in that** the piston-side and the piston rod-side chambers (26, 30, 28, 32) of the hydraulic cylinders (18, 20) are each provided with a pilot-controlled nonreturn valve (70, 72, 74, 76), the nonreturn valve (70, 72, 74, 76) opening in the direction of the respective chamber (26, 30, 28, 32).

19. Agricultural or construction industry vehicle (10), in particular loader vehicle, with a first axle (16) mounted in an oscillating manner and a sprung second axle (14), **characterized in that** a suspension system (22) according to one of Claims 1 to 18 is provided for the spring-suspension of the second axle (14).

**Revendications**

1. Système de suspension pour un véhicule agricole ou un engin de construction (10), notamment un véhicule chargeur, comprenant un premier et un deuxième cylindre hydraulique (18, 20), qui supportent un châssis (12) du véhicule (10) par rapport à un essieu (14, 16) du véhicule (10), les cylindres hydrauliques (18, 20) présentant à chaque fois une chambre côté piston (26, 28) et une chambre côté tige de piston (30, 32), et les cylindres hydrauliques (18, 20) étant connectés hydrauliquement l'un à l'autre dans un circuit en croix par le biais d'une première ligne de connexion (34, 48) et d'une deuxième ligne de connexion (38, 46), de sorte que la chambre du côté du piston (26) du premier cylindre hydraulique (18, 20) soit connectée à la chambre côté tige de piston (32) du deuxième cylindre hydraulique (20), et inversement, un premier accumulateur hydraulique (36) disposé dans la première ligne de connexion (34, 48) et un deuxième accumulateur hydraulique (40) disposé dans la deuxième ligne de connexion (38, 46), une source hydraulique (112), un réservoir hydraulique (88), un dispositif de soupape de commande (24, 24'), une unité de commande électronique (107), des soupapes de commutation (42, 44, 50, 52) pouvant être commutées électriquement, qui sont disposées dans la première et la deuxième ligne de connexion (34, 48, 38, 46) entre les accumulateurs hydrauliques (36, 40) et les chambres (26, 28, 30, 32) des cylindres hydrauliques (18, 20), et une première et une deuxième ligne d'alimentation (124, 138), qui relie le dispositif de soupape de commande (24, 24') aux lignes de connexion (34, 48, 38, 46), l'une des lignes d'alimentation (124) débouchant entre les soupapes de commutation (44, 50) de l'une des lignes de connexion (38, 46) dans l'une des lignes de connexion (38, 46) et l'autre ligne d'alimentation (138) débouchant entre les soupapes de commutation (42, 52) de l'autre ligne de connexion (34, 48) dans l'autre ligne de connexion (34, 48), **caractérisé en ce que** des moyens pour la détection et la compensation des états de charge du véhicule (10) sont prévus dans le système de suspension (22).

2.  Système de suspension selon la revendication 1, **caractérisé en ce que** les moyens pour la détection et la compensation des états de charge comprennent des convertisseurs de pression (54, 56) ainsi que des moyens pour détecter la position d'un convertisseur de pression (54, 56), les convertisseurs de pression (54, 56) étant disposés à chaque fois entre la chambre côté piston et côté tige de piston (26, 30, 28, 32) de chaque cylindre hydraulique (18, 20).

3.  Système de suspension selon la revendication 2, **caractérisé en ce que** le rapport de surface des surfaces produisant la pression dans les chambres (62, 64, 66, 68) d'un convertisseur de pression (54, 56) correspond essentiellement au rapport de surface des surfaces produisant la pression dans les chambres (26, 28, 30, 32) d'un cylindre hydraulique (18, 20).

4.  Système de suspension selon la revendication 2 ou 3, **caractérisé en ce que** les moyens pour détecter la position d'un convertisseur de pression (54, 56) comprennent un commutateur (58, 60) ou un capteur.

5.  Système de suspension selon la revendication 1, **caractérisé en ce que** les moyens pour la détection et la compensation des états de charge comprennent des capteurs de pression (92, 94, 96, 98), avec lesquels on peut détecter la pression dans les chambres individuelles (26, 28, 30, 32) du premier et du deuxième cylindre hydraulique (18, 20).

6.  Système de suspension selon la revendication 1, **caractérisé en ce que** les moyens pour la détection et la compensation des états de charge comprennent des commutateurs de pression (100, 102), qui sont en liaison à chaque fois avec l'une des chambres côté tige de piston (30, 32) du cylindre hydraulique (18, 20).

7.  Système de suspension selon la revendication 1, **caractérisé en ce que** les moyens pour la détection et la compensation des états de charge comprennent des capteurs de force, avec lesquels des forces agissant sur les cylindres hydrauliques (18, 20) peuvent être détectées directement ou indirectement.

8.  Système de suspension selon l'une quelconque des revendications 1 à 7, **caractérisé en ce que** les soupapes de commutation (42, 44, 50, 52) présentent une position de passage et une position de fermeture, la position de fermeture comprenant une soupape de non retour ouvrant dans la direction de la chambre (26, 28, 30, 32).

9.  Système de suspension selon l'une quelconque des revendications 1 à 7, **caractérisé en ce que** les soupapes de commutation (42, 44, 50, 52) présentent une position de passage et une position de fermeture fermant dans les deux directions, et sont montées en parallèle avec une soupape de non retour ouvrant dans la direction de la chambre (26, 28, 30, 32).

10. Système de suspension selon l'une quelconque des revendications 1 à 9, **caractérisé en ce que** les lignes d'alimentation ou de connexion (34, 48, 38, 46, 124, 138) sont pourvues de commutateurs de pression (104, 106).

11. Système de suspension selon l'une quelconque des revendications 1 à 10, **caractérisé en ce que** le dispositif de soupape de commande (24, 24') comprend une première ligne d'afflux (116) débouchant dans l'une des lignes d'alimentation (124) et une deuxième ligne d'afflux (130) débouchant dans l'autre ligne d'alimentation (138), ainsi qu'une première ligne d'écoulement (122) débouchant dans l'une des lignes d'alimentation (124) et une deuxième ligne d'écoulement (136) débouchant dans l'autre ligne d'alimentation (138), les lignes d'afflux (116, 130) pouvant être connectées par le biais de soupapes de commande d'afflux (114, 128, 154, 156) à la pompe hydraulique (112) ou au réservoir hydraulique (88) et les lignes d'écoulement (122, 136) pouvant être connectées par le biais de soupapes de commande d'écoulement (118, 132, 158, 160) au réservoir hydraulique (88).

12. Système de suspension selon la revendication 11, **caractérisé en ce que** les soupapes de commande d'afflux (114, 128) et/ou les soupapes de commande d'écoulement (118, 132) comprennent des soupapes de commutation.

13. Système de suspension selon la revendication 11 ou 12, **caractérisé en ce que** les soupapes de commande d'afflux (154, 156) et/ou les soupapes de commande d'écoulement (158, 160) comprennent des soupapes proportionnelles.

14. Système de suspension selon l'une quelconque des revendications 11 à 13, **caractérisé en ce qu'**il est prévu un dispositif de reconnaissance de charge (146), qui détecte une pression dans la première ou la deuxième ligne d'afflux (116, 130).

15. Système de suspension selon l'une quelconque des revendications 11 à 14, **caractérisé en ce que** les lignes d'afflux (116, 130) sont pourvues d'une soupape de non retour (142, 144) ouvrant dans la direction des lignes d'alimentation (124, 138).

16. Système de suspension selon l'une quelconque des revendications 11 à 15, **caractérisé en ce que** les lignes d'écoulement (122, 136) sont pourvues d'un étranglement ou d'un diaphragme (120, 134).

17. Système de suspension selon l'une quelconque des revendications 11 à 16, **caractérisé en ce que** les lignes d'écoulement (122, 136) sont pourvues d'une soupape de commande d'écoulement proportionnelle (158, 160), de préférence une soupape de commande d'écoulement proportionnelle sans fuite (118', 132').

18. Système de suspension selon l'une quelconque des revendications 1 à 17, **caractérisé en ce que** les chambres côté piston et côté tige de piston (26, 30, 28, 32) des cylindres hydrauliques (18, 20) sont pourvues à chaque fois d'une soupape de non retour (70, 72, 74, 76) déblocable, la soupape de non retour (70, 72, 74, 76) ouvrant dans la direction de chaque chambre (26, 30, 28, 32).

19. Véhicule agricole ou engin de construction (10), notamment véhicule chargeur, comprenant un premier essieu (16) monté en pendule, et un deuxième essieu suspendu (14), **caractérisé en ce que** pour la suspension du deuxième essieu (14), il est prévu un système de suspension (22) selon l'une quelconque des revendications 1 à 18.

Fig. 1

Fig. 2

Fig. 2a

$F_{LOAD}$

$P_{PISTON\_CYL}$

$A_{ROD\_CYL}$

$A_{ROD\_COMP}$

$A_{PISTON\_COMP}$

$P_{PISTON\_CYL}$

$A_{PISTON\_CYL}$

30   18   34

62

54

66

82   72

86

78   70

26   46

EP 1 911 614 B1

# Fig. 3

EP 1 911 614 B1

**Fig. 4**

Fig. 5

Fig. 6

Fig. 7

**EP 1 911 614 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9010551 A